(19) Europäisches Patentamt
European Patent Office
Office européen des brevets

(11) **EP 4 091 017 B1**

(12) **EUROPÄISCHE PATENTSCHRIFT**

(45) Veröffentlichungstag und Bekanntmachung des Hinweises auf die Patenterteilung:
**27.05.2026  Patentblatt 2026/22**

(21) Anmeldenummer: **21700037.1**

(22) Anmeldetag: **12.01.2021**

(51) Internationale Patentklassifikation (IPC):
**G02B 27/12** (2006.01)     **H01S 3/10** (2006.01)
**H01S 3/13** (2006.01)     **H01S 3/23** (2006.01)
**G02B 27/10** (2006.01)

(52) Gemeinsame Patentklassifikation (CPC):
**G02B 27/123; G02B 27/1093; H01S 3/06754; H01S 3/10053; H01S 3/1307; H01S 3/2383;** G02B 26/06; H01S 3/0071

(86) Internationale Anmeldenummer:
**PCT/EP2021/050461**

(87) Internationale Veröffentlichungsnummer:
**WO 2021/144250 (22.07.2021 Gazette 2021/29)**

(54) **VORRICHTUNG, LASERSYSTEM UND VERFAHREN ZUR KOMBINATION VON KOHÄRENTEN LASERSTRAHLEN**

APPARATUS, LASER SYSTEM AND METHOD FOR COMBINING COHERENT LASER BEAMS

DISPOSITIF, SYSTÈME DE LASER ET PROCÉDÉ POUR COMBINER DES FAISCEAUX LASER COHÉRENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2020  DE 102020200444**

(43) Veröffentlichungstag der Anmeldung:
**23.11.2022  Patentblatt 2022/47**

(73) Patentinhaber: **TRUMPF Laser SE**
**78713 Schramberg (DE)**

(72) Erfinder:
• **FLAMM, Daniel**
**71640 Ludwigsburg (DE)**
• **HEIMES, Andreas**
**71272 Renningen (DE)**

• **PROSSOTOWICZ, Maike**
**78733 Aichhalden (DE)**

(74) Vertreter: **Trumpf Patentabteilung**
**TRUMPF SE + Co. KG**
**Johann-Maus-Straße 2**
**71254 Ditzingen (DE)**

(56) Entgegenhaltungen:
**WO-A1-2020/016336     US-A1- 2007 201 795 US-A1- 2013 107 343**

• **MAIK ZIMMERMANN ET AL: "<title>Microlens laser beam homogenizer: from theory to application</title>", PROCEEDINGS OF SPIE, vol. 6663, 13 September 2007 (2007-09-13), pages 666302, XP055098544, ISSN: 0277-786X, DOI: 10.1117/12.731391**

## Beschreibung

Die Erfindung betrifft eine Vorrichtung zur Kombination einer Mehrzahl von kohärenten Laserstrahlen, umfassend: eine Aufteilungseinrichtung zur Aufteilung eines Eingangs-Laserstrahls auf die Mehrzahl von kohärenten Laserstrahlen, eine Mehrzahl von Phasen-Einstelleinrichtungen zur Einstellung einer jeweiligen Phase eines der kohärenten Laserstrahlen, sowie eine Strahlkombinationseinrichtung zur Kombination der kohärenten Laserstrahlen, die von einer Mehrzahl von Raster-Positionen einer Rasteranordnung ausgehen, wobei die Strahlkombinationseinrichtung eine Mikrolinsenanordnung mit mindestens zwei Mikrolinsen-Arrays aufweist. Die Erfindung betrifft auch ein Verfahren zum Kombinieren einer Mehrzahl von kohärenten Laserstrahlen, insbesondere mittels einer solchen Vorrichtung, umfassend: Einkoppeln der Mehrzahl von kohärenten Laserstrahlen, die von einer Mehrzahl von in einer Rasteranordnung angeordneten Raster-Positionen ausgehen, in eine Mikrolinsenanordnung, die mindestens zwei Mikrolinsen-Arrays aufweist, sowie Kombinieren der kohärenten Laserstrahlen in der Mikrolinsenanordnung.

Unter "kohärenten Laserstrahlen" wird im Sinne dieser Anmeldung eine zeitliche Kohärenz der Laserstrahlen zueinander verstanden. Im Allgemeinen können die Laserstrahlen einen verminderten Grad an räumlicher Kohärenz aufweisen, d.h. die Laserstrahlen können räumlich partiell kohärent sein, d.h. es handelt sich nicht zwingend um Single-Mode-Laserstrahlen. Beispielsweise können die Laserstahlen von Multimode-Quellen erzeugt werden und z.B. einen höhermodigen Gauß-Mode, z.B. ein Laguerre-Gauß-Mode, eine Hermite-Gauß-Mode oder Superpositionen davon bilden. Bevorzugt sind die Laserstrahlen jedoch sowohl zeitlich als auch räumlich kohärent.

In der US 2013 010 7343 A1 ist ein Lasersystem beschrieben, welches eine Laserquelle in Form eines Seed-Lasers sowie ein optisches Verstärkersystem aufweist, das einen verstärkten Laser-Output erzeugt. Das Lasersystem kann eine Phasen-Steuerungsschaltung mit einer Phasen-Modulations-Funktionalität für eine Mehrzahl von optischen Verstärkern aufweisen, die einen Sensor zur Messung der gesamten Ausgangsintensität der optischen Verstärker umfasst. Die Phasen-Steuerungsschaltung kann eine Phase bzw. eine relative Phasenbeziehung zwischen einzelnen der Anzahl von optischen Verstärkern verändern, um die gesamte Ausgangsintensität der optischen Verstärker zu maximieren. Das Lasersystem kann einen kohärenten Fernfeld-Kombinierer zur Kombination des Outputs der optischen Verstärker aufweisen, der ein Paar von Mikro-Linsen-Arrays umfasst.

Bei einer solchen kohärenten Strahlkombination wird eine Mehrzahl von Laserstrahlen, die von einer Mehrzahl von Raster-Positionen einer Rasteranordnung ausgehen, zu einem kombinierten Laserstrahl überlagert, der eine entsprechend höhere Leistung aufweist. Eine solche Strahlkombination kann - annähernd ohne Verlust an Strahlqualität - diffraktiv, reflektiv, beispielsweise über einen Segment-Spiegel, interferometrisch oder über eine Polarisationskopplung erfolgen.

Die US 2007/201795 A1 offenbart einen kohärenten Strahlkombinierer, bei welchem ein diffraktives optisches Element als Strahlkombinationseinrichtung zum Einsatz kommt.

Verschiedenste Laser-Anwendungsprozesse, z.B. additive Fertigung, Markieren, sowie Schweißen (sowohl mikro als auch makro) oder Laserschaltprozesse in Lasernetzwerken benötigen eine schnelle Ablenkung einer Fokusposition eines Laserstrahls (Scannen) und/oder das Aufteilen eines Laserstrahls zur Ausrichtung auf mehrere Fokuspositionen (Strahlteilen).

### Aufgabe der Erfindung

Der Erfindung liegt die Aufgabe zugrunde, eine Vorrichtung, ein Lasersystem und ein zugehöriges Verfahren zur Kombination von kohärenten Laserstrahlen bereitzustellen, welche es ermöglichen, die Strahlqualität bei der Kombination nahezu vollständig zu erhalten und gleichzeitig eine schnelle Ablenkung eines kombinierten Laserstrahls und/oder eine Strahlaufteilung eines kombinierten Laserstrahls mit einer vorgegebenen Aufteilung der Eingangs-Leistung zu ermöglichen.

### Gegenstand der Erfindung

Diese Aufgabe wird erfindungsgemäß durch eine Vorrichtung der eingangs genannten Art gelöst, welche eine Steuerungseinrichtung aufweist, die zur Einstellung der Phase eines jeweiligen kohärenten Laserstrahls in Abhängigkeit von einer Anordnung der jeweiligen Raster-Position innerhalb der Rasteranordnung ausgebildet bzw. programmiert ist, um die kohärenten Laserstrahlen zu mindestens einem in eine von der nullten Beugungsordnung verschiedene Beugungsordnung gebeugten Laserstrahl zu kombinieren und/oder die zur Variation der jeweiligen Phase eines der kohärenten Laserstrahlen in Abhängigkeit von einer Anordnung der jeweiligen Raster-Position innerhalb der Rasteranordnung ausgebildet bzw. programmiert ist, um eine Beugungsordnung zu verändern, in die der mindestens eine kombinierte Laserstrahl gebeugt wird.

Grundsätzlich können die Raster-Positionen der Rasteranordnung entlang einer Geraden oder einer Kurve (eindimensionale Rasteranordnung) oder entlang einer Ebene oder einer gekrümmten Fläche (zweidimensionale Rasteranordnung) gebildet sein. Entlang der Rasteranordnung sind die kohärenten Laserstrahlen so weit separiert bzw. voneinander beabstandet, dass der gewünschte Füllfaktor erreicht wird. Die Raster-Positionen der Rasteranordnung können an den Stirnseiten von Fasern (Emissionsflächen) oder von anderen Emittern gebildet sein, an denen ein jeweiliger kohärenter Laserstrahl emittiert wird. In diesem Fall sind die Fasern, genauer gesagt deren Stirnseiten, in einer Rasteranordnung angeordnet und die Raster-Positionen entsprechen den Emissionsflächen an den Stirnseiten der Fasern. Die Raster-Positionen bzw. die Rasteranordnung kann aber auch dem Nahfeld bzw. dem Fernfeld der Emissionsflächen entsprechen, d.h. die Raster-Positionen können entlang einer Kurve bzw. einer Fläche im Raum angeordnet sein, auf welche die Emissionsflächen abgebildet werden, so dass die Ortsverteilung der Raster-Positionen der - ggf. skalierten - Ortsverteilung der Emissionsflächen entspricht.

Die Rasteranordnung bildet somit eine Kurve bzw. eine Fläche im Raum, entlang derer ein gewünschter Abstand zwischen den Raster-Positionen bzw. zwischen den kohärenten Laserstrahlen vorliegt. Bei der Verwendung einer Fourierlinse zur Einkopplung der kohärenten Laserstrahlen (s.u.) liegt der gewünschte Abstand beispielsweise in der Brennebene der Fourierlinse vor.

Aus der eingangs zitierten US 2013 010 7343 A1 ist es bekannt, eine (Mikro-)Linsenanordnung als Strahlkombinationseinrichtung zur kohärenten Kombination einer Mehrzahl von kohärenten Laserstrahlen zu einem kombinierten Laserstrahl zu verwenden. In der DE 10 2018 211 971.6 bzw. in der PCT/EP2019/069324 ist beschrieben, wie die Phasen bzw. die Phasenunterschiede (Grund-Phasen) zwischen den kohärenten Laserstrahlen bei einer Mikrolinsenanordnung als Strahlkombinationseinrichtung gewählt werden sollten, um einen kombinierten Laserstrahl mit einer optimierten, hohen Strahlqualität zu erzeugen. Dort ist auch angegeben, wie die Mikrolinsenanordnung im Hinblick auf ihre Parameter (Rasterabstand (pitch) der Mikrolinsen, Brennweite der Mikrolinsen bzw. der Mikrolinsenanordnung, Abstand der Mikrolinsen-Arrays, ... ) optimiert werden sollte, um einen kombinierten Laserstrahl mit optimierter Strahlqualität zu erzeugen.

Erfindungsgemäß wird vorgeschlagen, von den Phasen für die im Hinblick auf die Strahlqualität optimierte Kombination zur Beugung in die nullte Beugungsordnung hinsichtlich der Phasen bzw. der Phasenunterschiede der kohärenten Laserstrahlen gezielt abzuweichen, um eine kontrollierte Strahlablenkung bzw. eine kontrollierte Strahlteilung vorzunehmen.

Hierbei wird die Phase eines jeweiligen kohärenten Laserstrahls individuell in Abhängigkeit von der Anordnung der dem jeweiligen kohärenten Laserstrahl zugeordneten Raster-Position der Rasteranordnung mit Hilfe der Steuerungseinrichtung so eingestellt, dass die kohärenten Laserstrahlen nicht mehr zu einem einzigen bzw. einzelnen Laserstrahl kombiniert werden, sondern in zwei oder mehr wohldefinierte Bündel bzw. in zwei oder mehre kombinierte Laserstrahlen, die mit definierter Leistungsverteilung bzw. Leistungs-Aufteilung in unterschiedliche Beugungsordnungen gebeugt werden (Strahlteilung) oder in einen einzigen Laserstrahl, der in eine von der nullten Beugungsordnung verschiedene Beugungsordnung gebeugt wird (Strahlablenkung).

Der vorgeschlagene Ansatz basiert auf dem Konzept des Optical Phase Array (OPA), bei dem ein Satz von Absolut-Phasen der ein- oder zweidimensionalen Rasteranordnung der kohärenten Laserstrahlen so gewählt wird, dass es zur konstruktiven Interferenz an wohldefinierten Beugungsordnungen kommt. In einer ein- oder zweidimensionalen Rasteranordnung (Array) können die Phasen der zu kombinierenden kohärenten Laserstrahlen so gewählt werden, dass sich gezielt einzelne kombinierte Laserstrahlen, Gruppen von kombinierten Laserstrahlen oder ein gesamtes Array von kombinierten Laserstrahlen, das einem Satz von Beugungsordnungen entspricht, ab- oder zuschalten lässt. Für eine jeweils gewünschte Gruppe von kombinierten Laserstrahlen, die mit der Vorrichtung erzeugt werden soll, kann beispielsweise mit Hilfe eines iterativen Optimierungsalgorithmus ein geeigneter Satz von (Absolut-)Phasen gewählt werden, um gezielt die Beugung in bestimmte Beugungsordnungen an- oder abzuschalten. Auf diese Weise kann eine variable Strahlteilung bzw. Ablenkung und Leistungs-Aufteilung realisiert werden. Bei dem iterativen Optimierungsalgorithmus kann es sich um einen stochastischen bzw. randomisierten Algorithmus handeln, dem als Startwerte beispielsweise eine homogene Leistungs-Aufteilung bzw. Intensitätsverteilung vorgegeben wird.

Die Phasen-Einstelleinrichtungen dienen zur Einstellung der jeweiligen Phase der kohärenten Laserstrahlen und können an einem beliebigen Ort vor der Mikrolinsenanordnung angeordnet sein, an dem die kohärenten Laserstrahlen voneinander getrennt sind und nicht mehr überlappen. Diese Phasen-Einstelleinrichtungen sind u.a. deshalb notwendig, da z.B. thermische Effekte, Vibrationen oder auch Luftturbulenzen zu optischen Weglängenunterschieden in den einzelnen Kanälen führen. Für die Realisierung der Phasen-Einstelleinrichtungen, die typischerweise zur Einstellung einer variablen Phasenverzögerung ausgebildet sind, besteht eine Vielzahl von Möglichkeiten: Beispielsweise kann es sich bei den Phasen-Einstelleinrichtungen um Modulatoren in Form von EOMs (elektro-optische Modulatoren, z.B. in Form von Flüssigkristallen), SLMs (Spatial Light Modulators), optische Verzögerungsstrecken in Form von Spiegelanordnungen, elektro-mechanische Modulatoren, z.B. in Form von Piezo-Spiegeln oder dergleichen handeln. Für den Fall, dass die kohärenten Laserstrahlen im Strahlweg vor der Rasteranordnung in einer Faser geführt werden, kann für die Phasen-Einstellung z.B. mittels Piezo-Stellelementen eine Zugspannung auf die Faser aufgebracht werden, eine Temperatur-Beeinflussung der Faser vorgenommen werden, etc. Die Steuerungseinrichtung kann als Hard- und/oder Software realisiert sein, z.B. in Form eines Micro-Controllers, eines FPGAs, eines ASICs, etc. Die Steuerungseinrichtung ist ausgebildet, auf die Phasen-Einstelleinrichtungen auf geeignete Weise, z.B. durch geeignete elektronische (Steuer-)Signale, einzuwirken.

Bei der Aufteilungseinrichtung zur Aufteilung des Eingangs-Laserstrahls kann es sich z.B. um eine herkömmliche 1-zu-N-Kopplungseinrichtung, beispielsweise in Form eines einzelnen oder mehrerer Mikrolinsen-Arrays, um einen Faser-Splitter, mehrere in Reihe geschaltete Strahlteilerwürfel, Polarisationsstrahlteiler, um ein Beugungsgitter zur Strahlteilung, etc. handeln. Bei dem Eingangs-Laserstrahl kann es sich um einen von einer Laserquelle erzeugten Seed-Laserstrahl handeln oder der Eingangs-Laserstrahl kann z.B. durch Aufteilung und kohärente Kombination aus einem Seed-Laserstrahl einer Laserquelle erzeugt werden.

Alternativ können auch mehrere Laserquellen, beispielsweise in Form von Faseroszillatoren, Laserdioden, etc. zur Erzeugung der Mehrzahl von kohärenten Laserstrahlen dienen, so dass auf eine Aufteilungseinrichtung verzichtet werden kann. In diesem Fall weist ein Lasersystem, welches die mindestens eine Laserquelle enthält, eine Steuerungseinrichtung zur Ansteuerung der Laserdioden bzw. der Laserquellen auf, um die kohärenten Laserstrahlen zu erzeugen. Die Laserquelle(n) können zur Erzeugung von Ultrakurzpuls-Laserstrahlen ausgebildet sein, d.h. von kohärenten Laserstrahlen, die eine Pulsdauer von weniger als z.B. $10^{-12}$ s aufweisen.

Die in der bzw. in den Laserquellen erzeugten kohärenten Laserstrahlen können mit Hilfe einer Mehrzahl von Strahlführungseinrichtungen, beispielsweise in Form von Fasern, zu der Rasteranordnung geführt werden. Die individuelle Strahlführung der Laserstrahlen ermöglicht es, auf diese einzeln einzuwirken, um mit Hilfe der Phasen-Einstelleinrichtung die relativen Phasen geeignet einzustellen. Die Strahlführungseinrichtungen können eine entsprechende Anzahl von Verstärkern oder Verstärkerketten, beispielsweise in Form von Faser-Verstärkern, aufweisen, um die Laserstrahlen zu verstärken, bevor diese an den Raster-Positionen in Richtung auf die Mikrolinsenanordnung emittiert werden. Die Phasen-Einstelleinrichtungen können im Strahlweg vor den Strahlführungseinrichtungen oder nach den Strahlführungseinrichtungen angeordnet sein und/oder auf die Strahlführungseinrichtungen, z.B. in Form der Fasern, einwirken. Alternativ können die kohärenten Laserstrahlen nach der Aufteilung an der Aufteilungseinrichtung in Freistrahlpropagation zu der Rasteranordnung gelangen, die sich beispielsweise in einer Brennebene einer Fourierlinse oder an einem anderen Ort befinden kann, an dem die kohärenten Laserstrahlen ausreichend weit voneinander beabstandet sind. In der Brennebene einer solchen Fourierlinse bzw. an dem anderen Ort weisen die kohärenten Laserstrahlen - ggf. nach geeigneter Umlenkung - den gewünschten Füllfaktor, d.h. ein gewünschtes Verhältnis zwischen der Erstreckung bzw. dem Strahldurchmesser der jeweiligen Laserstrahlen in einer jeweiligen Raumrichtung und dem Abstand zwischen den Mittelpunkten benachbarter Laserstrahlen auf..

Die Steuerungseinrichtung kann ausgebildet sein, die jeweilige Phase der kohärenten Laserstrahlen zur Veränderung einer Beugungsordnung zu variieren, in die der mindestens eine kombinierte Laserstrahl gebeugt wird. Auf diese Weise kann ein extrem schneller, diskreter Scanvorgang realisiert werden, bei dem der mindestens eine gebeugte Laserstrahl zwischen unterschiedlichen Beugungsordnungen hin- und herspringt bzw. hin- und her bewegt wird. Die Vorrichtung kann in diesem Fall als Scannereinrichtung bzw. als Strahlformungseinheit dienen.

Der Scanvorgang kann mit einem in eine einzige Beugungsordnung gebeugten Laserstrahl durchgeführt werden, es ist aber auch möglich, mit einem auf zwei oder mehr Beugungsordnungen (maximal $\pm(N-1)/2$ Beugungsordnungen) aufgeteilten Laserstrahl, d.h. mit zwei oder mehr kombinierten Laserstrahlen, einen diskreten Scanvorgang zu realisieren. In diesem Fall kann mit Hilfe der Steuerungseinrichtung die Phasenbeziehung bzw. die Phase eines jeweiligen kohärenten Laserstrahls eingestellt werden, die zur Beugung bzw. zur Aufteilung des kombinierten Laserstrahls auf mindestens zwei unterschiedliche Beugungsordnungen benötigt wird. Durch die Variation der Phase der kohärenten Laserstrahlen kann die Leistungsverteilung auf die verschiedenen Beugungsordnungen verändert werden. in welche die mindestens zwei kombinierten Laserstrahlen gebeugt werden. Auf diese Weise kann ein diskreter Scanvorgang mit einer Anzahl von kombinierten Laserstrahlen erfolgen, wobei das Scanfeld zwischen $-((N-1)/2)$ Beugungsordnung und $(N-1)/2$ Beugungsordnung liegt und N die Anzahl der kohärenten Laserstrahlen bezeichnet.

Die Steuerungseinrichtung kann die jeweilige Phase der kohärenten Laserstrahlen in Abhängigkeit von einer in einer Speichereinrichtung hinterlegten Parameter-Tabelle einstellen bzw. variieren, um den mindestens einen kombinierten Laserstrahl entlang einer vorgegebenen (diskreten) Bewegungsbahn zu bewegen. Der Steuerungseinrichtung können die jeweils einzustellenden Phasen auch von außen, z.B. durch einen Benutzer, vorgegeben werden oder die einzustellenden Phasen können in Abhängigkeit von mindestens einer Messgröße vorgegeben bzw. variiert werden, die beispielsweise mit Hilfe einer Sensor-Anordnung gemessen wird, d.h. es kann eine Regelung der Phasen auf einen jeweiligen Soll-Wert erfolgen. Bei der hier beschriebenen Strahlkombination, bei welcher der mindestens eine kombinierte Laserstrahl bzw. mindestens ein kombinierter Laserstrahl nicht in die nullte Beugungsordnung gebeugt wird, ist es in der Regel erforderlich, für die Phasen-Detektion ein Sensor-Array oder ggf. einen ortsauflösenden Sensor zu verwenden.

Für den Fall, dass der kombinierte Laserstrahl mittels einer Linse bzw. abbildenden Optik abgebildet wird, propagiert der (mindestens eine) kombinierte Laserstrahl nicht mehr entlang der optischen Achse, sondern parallel versetzt zur optischen Achse. Der Betrag des Parallel-Versatzes des kombinierten Laserstrahls hängt von der höheren Beugungsordnung ($\pm 1$, $\pm 2$, etc.) ab, in die dieser gebeugt wird. Für den Fall, dass die Raster-Positionen in einer zweidimensionalen Rasteranordnung angeordnet sind, kann der (mindestens eine) kombinierte Laserstrahl auf diese Weise in zwei typischerweise zueinander senkrechten Richtungen parallel zur optischen Achse versetzt werden.

Es hat sich gezeigt, dass sich für die Wahl bzw. für die Festlegung der Phasen der kohärenten Laserstrahlen beim diskreten Scannen in Spezialfällen analytische Zusammenhänge finden lassen, die nachfolgend angegeben sind.

Bei einer Ausführungsform ist die Steuerungseinrichtung zur Einstellung der jeweiligen Phase eines der kohärenten Laserstrahlen ausgebildet, die sich aus einer jeweiligen zusätzlichen Phase und einer jeweiligen Grund-Phase zusammensetzt, bei der die Strahlkombinationseinrichtung die kohärenten Laserstrahlen zu einem einzigen in die nullte Beugungsordnung oder in eine von der nullten Beugungsordnung verschiedene Beugungsordnung gebeugten Laserstrahl kombiniert. Die zusätzliche Phase ermöglicht eine Aufteilung des kombinierten Laserstrahls auf zwei oder mehr Beugungsordnungen bzw. eine Veränderung der Beugungsordnung, in die der kombinierte Laserstrahl gebeugt wird. Bevorzugt werden die Grund-Phasen so gewählt, dass die Strahlkombinationseinrichtung die kohärenten Laserstrahlen in die nullte Beugungsordnung kombiniert.

Bei einer Weiterbildung sind die Raster-Positionen entlang einer ersten Richtung voneinander beabstandet angeordnet und die Steuerungseinrichtung ist ausgebildet, zur Kombination der kohärenten Laserstrahlen zu einem einzelnen, in eine von der nullten Beugungsordnung verschiedene Beugungsordnung $B_{k,x}$ gebeugten kombinierten Laserstrahls die jeweilige zusätzliche Phase $\Delta\varphi_a$ eines kohärenten Laserstrahls an einer a-ten Raster-Position in der ersten Richtung einzustellen, die gegeben ist durch:

$$\Delta\varphi_a = - (2\pi / N) (a - (N+1) / 2) B_{k,x}$$

wobei N eine Anzahl der in der ersten Richtung angeordneten Raster-Positionen und $B_{k,x}$ eine ganzzahlige positive oder negative Zahl ($\pm 1$, $\pm 2$, etc.) bezeichnen. Der Betrag von $B_{k,x}$ (bzw. die Beugungsordnung) ist typischerweise nicht größer als (N-1) / 2. Grundsätzlich wird nachfolgend davon ausgegangen, dass die Grund-Phasen so

gewählt sind, dass eine Kombination des Laserstrahls in die 0. Beugungsordnung erfolgt.

Die Raster-Positionen sind in der ersten Richtung in gleichen Abständen voneinander (äquidistant) angeordnet. Die Raster-Positionen können in diesem Fall auf einer Linie angeordnet sein, die sich entlang der ersten Richtung erstreckt, d.h. die Strahlaustrittsrichtungen bzw. die Poynting-Vektoren der kohärenten Laserstrahlen sind parallel zueinander ausgerichtet. Alternativ können die Raster-Positionen auch in gleichen Abständen voneinander z.B. auf einem Kreisbogen angeordnet sein, der sich in bzw. entlang der ersten Richtung erstreckt.

Bei einer Weiterbildung dieser Ausführungsform sind die Raster-Positionen der Rasteranordnung zusätzlich entlang einer zweiten, zur ersten senkrechten Richtung angeordnet und die Steuerungseinrichtung ist ausgebildet, zur Kombination der kohärenten Laserstrahlen zu einem einzigen, in eine von der nullten Beugungsordnung verschiedene Beugungsordnung $B_{k,x}$ in der ersten Richtung und in eine von der Nullten verschiedene Beugungsordnung $B_{k,y}$ in der zweiten Richtung gebeugten kombinierten Laserstrahl eine zusätzliche Phase $L\varphi_{a,b}$ eines kohärenten Laserstrahls an einer a-ten Raster-Position in der ersten Richtung und einer b-ten Raster-Position in der zweiten Richtung einzustellen, die gegeben ist durch:

$$\Delta\varphi_{a,b} = - ((2\pi / N) (a - (N+1) / 2) B_{k,x} + (2\pi / M (b - (M+1) / 2) B_{k,y}))$$

wobei M eine Anzahl der Raster-Positionen in der zweiten Richtung und $B_{k,y}$ eine ganzzahlige positive oder negative Zahl bezeichnen. Die zusätzliche Phase $\Delta\varphi_{a,b}$ wird an einer a-ten Raster-Position in der ersten Richtung eingestellt, die gleichzeitig eine b-te Raster-Position in der zweiten Richtung bildet. Für den Fall, dass die Raster-Positionen in der Rasteranordnung nur entlang der ersten Richtung angeordnet sind, werden die kohärenten Laserstrahlen zu einem einzigen Laserstrahl kombiniert, der in der zweiten Richtung in die nullte Beugungsordnung gebeugt wird (d.h. $B_{k,y} = 0$). Für den eindimensionalen Fall ergibt sich somit die weiter oben angegebene Formel für die zusätzliche Phase $\Delta\varphi_a$.

Bei dieser Weiterbildung wird an Stelle einer eindimensionalen kohärenten Kombination von Laserstrahlen eine Mehrzahl von N x M Laserstrahlen zweidimensional zu einem oder zu mehreren Laserstrahlen kombiniert. In diesem Fall sind die Raster-Positionen in einer zweidimensionalen Rasteranordnung angeordnet, wobei die Abstände zwischen benachbarten Raster-Positionen in beiden Richtungen typischerweise gleich sind, wenn die Anzahl der Raster-Positionen in beiden Richtungen gleich ist (d.h. N = M) oder - für den Fall, dass N ungleich M ist - unterschiedlich gewählt werden. Das Raster bzw. die Rasteranordnung mit den Raster-Positionen kann sich hierbei in einer Ebene (z.B. XY-Ebene) oder auf einer gekrümmten Fläche erstrecken, z.B. auf einer Kugelschale. Die von den Raster-Positionen ausgehenden Laserstrahlen sind im ersten Fall typischerweise parallel ausgerichtet und können im zweiten Fall beispielsweise in Richtung auf den Mittelpunkt der Kugelschlale hin ausgerichtet sein, an dem die Mikrolinsenanordnung angeordnet ist.

Die Periodizität des Rasters mit den Raster-Positionen gibt hierbei die Rasterabstände der Mikrolinsen in zwei unterschiedlichen, beispielsweise senkrechten Richtungen (X, Y) vor. In diesem Fall können 2-dimensionale Mikrolinsen-Arrays verwendet werden, deren Rasterabstände $p_X$, $p_Y$ sich ggf. in den beiden zueinander senkrechten Richtungen X, Y in Abhängigkeit von der Periodizität des Rasters unterscheiden. Die Mikrolinsen des 2-dimensionalen Mikrolinsen-Arrays weisen entsprechend eine ggf. unterschiedliche Krümmung in X-Richtung bzw. in Y-Richtung auf, d.h. es handelt sich

EP 4 091 017 B1

nicht um Zylinderlinsen. Es ist auch möglich, ein jeweiliges 2-dimensionales Mikrolinsen-Array durch zwei 1-dimensionale Mikrolinsen-Arrays mit Zylinderlinsen zu ersetzen, wobei die Zylinderlinsen der 1-dimensionalen Mikrolinsen-Arrays senkrecht zueinander ausgerichtet sind.

Der Zusammenhang zwischen dem 2-dimensionalen Raster mit den Raster-Positionen und den 2-dimensionalen Mikrolinsen-Arrays ist analog zum Zusammenhang zwischen dem Bravais-Gitter und dem reziproken Gitter. Entsprechend kann die Anordnung der Raster-Positionen auch einer dichtesten Packung, d.h. einem hexagonalen Gitter, entsprechen. Die Mikrolinsen der Mikrolinsen-Arrays sind in diesem Fall ebenfalls in einer hexagonalen Anordnung angeordnet.

Für den Fall, dass die Raster-Positionen in einer ersten Richtung X in gleichen Abständen voneinander (äquidistant) angeordnet sind, ergibt sich für die Grund-Phasen $\delta\varphi_a$, die einen in die $B_{k,x}$-te Beugungsordnung in der ersten Richtung X gebeugten Laserstrahl erzeugen:

$$\delta\varphi_a = - \pi / N (m_a + B_{k,x})^2,$$

wobei für den Laufindex $m_a$ gilt: $m_a = -\frac{(N+1)}{2} + a$ mit $a$ = 1, ..., N, und $B_{k,x}$ eine ganzzahlige positive oder negative Zahl zwischen -((N-1)/2) und (N-1)/2 inklusive 0 bezeichnet, welche der jeweiligen Beugungsordnung in der ersten Richtung entspricht.

Für den weiter oben beschriebenen Fall, dass die Raster-Positionen zusätzlich entlang einer zweiten, bevorzugt zur ersten senkrechten Richtung Y angeordnet sind, ergibt sich für die Grund-Phasen $\delta\varphi_{a,b}$ die einen in die $B_{k,x}$-te Beugungsordnung in der ersten Richtung X und einen in die $B_{k,y}$-te Beugungsordnung in der zweiten Richtung Y gebeugten Laserstrahl erzeugen:

$$\delta\varphi_{a,b} = - \pi / N (m_a + B_{k,x})^2 - \pi / M (m_b + B_{k,y})^2,$$

**wobei** für den Laufindex $m_b$ gilt: $m_b = -\frac{(M+1)}{2} + b$ mit $b$ = 1, ... , M, wobei M wie weiter oben die Anzahl der in der zweiten Richtung angeordneten Raster-Positionen bezeichnet, und wobei $B_{k,y}$ eine ganzzahlige positive oder negative Zahl zwischen - ((M-1)/2) und (M-1)/2 inklusive 0 bezeichnet, welche der jeweiligen Beugungsordnung in der zweiten Richtung entspricht.

Die Einhaltung der weiter oben angegebenen Bedingungen für die zusätzlichen Phasen $\Delta\varphi_a$ bzw. $\Delta\varphi_{a,b}$ sowie für die Grund-Phasen $\delta\varphi_a$ bzw. $\delta\varphi_{a,b}$ ermöglicht eine Ablenkung ohne Effizienzverlust. Es versteht sich aber, dass die obigen Bedingungen in der Praxis nicht exakt eingehalten werden können. Für den Fall, dass von den obigen Bedingungen abgewichen wird, verschlechtert sich die Strahlqualität des abgelenkten Laserstrahls. Im Sinne dieser Anmeldung werden die obigen Bedingungen als erfüllt angesehen, wenn die rechte Seite um nicht mehr als 20%, bevorzugt um nicht mehr als 10%, insbesondere um nicht mehr als 5% vom Wert $\Delta\varphi_a$ bzw. $\Delta\varphi_{a,b}$ auf der linken Seite abweicht, d.h. wenn gilt: $|\Delta\varphi_a + 2(\pi / N)(a - (N+1)/2) B_{k,x}| < 0{,}2$, bevorzugt $< 0{,}1$, insbesondere $< 0{,}05$. Entsprechendes gilt auch für $A\varphi_{a,b}$, d.h. $|\Delta\varphi_{a,b} + ((2\pi / N)(a - (N+1)/2) B_{k,x} + (2\pi / M)(b - (M+1)/2)) B_{k,y}| < 0{,}2$, bevorzugt $< 0{,}1$, insbesondere $< 0{,}05$. Entsprechendes gilt auch für die Grund-Phasen $\delta\varphi_a$ bzw. $\delta\varphi_{a,b}$, d.h. $|\delta\varphi_a + \pi / N (m_a + B_{k,x})^2| < 0{,}2$, bevorzugt $< 0{,}1$, insbesondere $< 0{,}05$ bzw. $|\delta\varphi_{a,b} + \pi / N (m_a + B_{k,x})^2 + \pi / M (m_b + B_{k,y})^2| < 0{,}2$, bevorzugt $< 0{,}1$, insbesondere $< 0{,}05$.

Bei einer alternativen Ausführungsform ist die Steuerungseinrichtung ausgebildet, die jeweilige zusätzliche Phase der kohärenten Laserstrahlen zur Veränderung einer ersten Beugungsordnung, in die ein erster kombinierter Laserstrahl gebeugt wird, und/oder zur Veränderung einer zweiten Beugungsordnung, in die ein zweiter kombinierter Laserstrahl gebeugt wird, zu variieren. Bei dieser Ausführungsform werden die kohärenten Laserstrahlen von der Strahlkombinationseinrichtung zu mindestens zwei gebeugten Laserstrahlen kombiniert. Um dies zu erreichen, werden die jeweiligen (zusätzlichen) Phasen der kombinierten Laserstrahlen geeignet gewählt, wozu ein iterativer, z.B. stochastischer Optimierungsalgorithmus eingesetzt werden kann, um gezielt die ($\pm$(N-1)/2-te oder nullte) Beugungsordnung des ersten kombinierten Laserstrahls sowie die ($\pm$(N-1)/2-te oder nullte)Beugungsordnung des zweiten kombinierten Laserstrahls zu variieren bzw. einzustellen. Es versteht sich, dass eine variable Strahlteilung nicht auf zwei kombinierte Laserstrahlen beschränkt ist, sondern auch mit mehr als zwei kombinierten Laserstrahlen durchgeführt werden kann.

Bei einer weiteren Ausführungsform ist die Aufteilungseinrichtung zur Aufteilung eines Eingangs-Laserstrahls auf die Mehrzahl von kohärenten Laserstrahlen als weitere Mikrolinsenanordnung bevorzugt mit zwei weiteren Mikrolinsen-Arrays ausgebildet und die Steuerungseinrichtung ist ausgebildet, zur Kombination der kohärenten Laserstrahlen zu einem einzigen, in eine von der nullten Beugungsordnung verschiedene Beugungsordnung $B_{k,x}$ in der ersten Richtung und bevorzugt in eine von der nullten Beugungsordnung verschiedene Beugungsordnung $B_{k,y}$ in der zweiten Richtung gebeugten kombinierten Laserstrahl das Doppelte der Grund-Phasen einzustellen.

Es hat sich gezeigt, dass für den Spezialfall, dass sowohl zum Aufteilen eines Eingangs-Laserstrahls auf die Mehrzahl von kohärenten Laserstrahlen als auch zum Kombinieren der kohärenten Laserstrahlen jeweils eine Mikrolinsenanordnung verwendet wird, erforderlich ist, die in den obigen Gleichungen angegebenen Werte für die Grund-Phasen $\delta\varphi_a$, $\delta\varphi_{a,b}$ zu verdoppeln. Grundsätzlich gilt, dass für den Spezialfall von zwei Mikrolinsenanordnungen, die insbesondere identisch aufgebaut sein können, eine Verdopplung der Grund-Phasen gegenüber dem Fall erforderlich ist, dass zum Kombinieren ein Faser-Splitter oder eine andere optische Einrichtung verwendet wird. Die Verdopplung der Grund-Phasen ist somit nicht auf die weiter oben angegebenen Gleichungen beschränkt, sondern gilt allgemein.

Bei einer weiteren Ausführungsform ist die Steuerungseinrichtung zur Einstellung einer jeweiligen zusätzlichen Phase der kohärenten Laserstrahlen zur Erzeugung einer vorgegebenen, insbesondere unterschiedlichen Leistung der mindestens zwei in verschiedene Beugungsordnungen gebeugten kombinierten Laserstrahlen ausgebildet. Insbesondere kann die Steuerungseinrichtung zur Variation der jeweiligen zusätzlichen Phase eines der kohärenten Laserstrahlen in Abhängigkeit von einer Anordnung der jeweiligen Raster-Position des kohärenten Laserstrahls innerhalb der Rasteranordnung ausgebildet sein, um die vorgegebene, insbesondere unterschiedliche Leistung bzw. die Leistungs-Verteilung zeitlich zu verändern.

Die Eingangs-Leistung kann auf die jeweiligen kombinierten Laserstrahlen gleich verteilt werden, es ist aber auch möglich, eine vorgegebene, unterschiedliche Aufteilung der Eingangs-Leistung auf die mindestens zwei in unterschiedliche Beugungsordnungen kombinierten Laserstrahlen vorzunehmen sowie diese Aufteilung ggf. zeitlich zu variieren.

Für den Fall der Kombination der kohärenten Laserstrahlen zu einem ersten, in die nullte Beugungsordnung gebeugten kombinierten Laserstrahl und zu einem zweiten, in die $\pm1$. Beugungsordnung in der ersten Richtung gebeugten kombinierten Laserstrahl kann die Aufteilung der Eingangs-Leistung p auf die 0. bzw. auf die $\pm1$. Beugungsordnung beispielsweise wie folgt erfolgen: $p_0 = C\,p$; $p_{\pm1} = (1 - C)\,p$, mit $0 < C < 1$. Für die beiden Fälle $C = 1$ bzw. $C = 0$ wird nur ein kombinierter, in die 0. bzw. in die $\pm1$. Beugungsordnung gebeugter kombinierter Laserstrahl erzeugt. Für den Fall $C = 0,5$ wird die Hälfte der Eingangs-Leistung p in die 0. Beugungsordnung und die andere Hälfte in die $\pm1$. Beugungsordnung gebeugt.

Für die zusätzliche Phase eines jeweiligen kohärenten Laserstrahls an einer a-ten Raster-Position in der ersten Richtung, welche die oben angegebene Leistungs-Aufteilung mit dem Faktor C erzeugt, gilt:

$$\Delta\varphi_a = \pm\, C\,(2\,\pi\,/\,N)\,(a - (N+1)\,/\,2),$$

wobei für ein positives Vorzeichen in obiger Gleichung ein Anteil der Eingangs-Leistung p in die -1. Beugungsordnung gebeugt wird und wobei für ein negatives Vorzeichen in obiger Gleichung ein Anteil der Eingangs-Leistung in die +1. Beugungsordnung gebeugt wird. Die obige Gleichung kann analog zu den weiter oben angegebenen Gleichungen für die zusätzliche Phase $\Delta\varphi_a$ auf den zweidimensionalen Fall verallgemeinert werden, wobei sich nachfolgende Formel für die zusätzliche Phase $\Delta\varphi_{a,b}$ ergibt:

$$\Delta\varphi_{a,b} = \pm\, C\,(2\,\pi\,/\,N)\,(a - (N+1)\,/\,2) \pm C\,(2\,\pi\,/\,M)\,(b - (M+1)\,/\,2).$$

Der Faktor C kann konstant gewählt oder zeitabhängig verändert werden. In letzterem Fall kann die Vorrichtung in der Art einer akusto-optischen oder elektromechanischen Komponente in Form von Deflektoren bzw. Modulatoren betrieben werden. Die obigen Formeln für die zusätzliche Phase gelten allgemein für den Fall, dass die Eingangs-Leistung zwischen zwei unmittelbar benachbarten Beugungsordnungen aufgeteilt werden soll. Für den Fall, dass die Grund-Phase so eingestellt wird, dass eine Beugung der kohärenten Laserstrahlen in die +1. Beugungsordnung erfolgt, erfolgt die Aufteilung der Eingangs-Leistung zwischen der +1. Beugungsordnung und der +2. Beugungsordnung.

Bei einer Anzahl M von mehr als zwei kombinierten Laserstrahlen kann die Aufteilung beispielsweise in Form einer (linearen) Leistungs-Rampe realisiert werden, bei der ein erster kombinierter Laserstrahl mit einer maximalen Leistung $p_{k.max}$ in die k-te Beugungsordnung gebeugt wird und bei der die übrigen M-1 kombinierten Laserstrahlen mit einer in Bezug auf die maximale Leistung $p_{k.max}$ reduzierten Leistung in die übrigen M-1 Beugungsordnungen gebeugt werden. Für die Leistungs-Verteilung in Form eines Leistungs-Keils kann beispielsweise gelten: $a\,/\,M\,p_{k,max}$, mit $a = 1$, ..., M. Für das Beispiel einer Anzahl von fünf gebeugten kombinierten Laserstrahlen ergeben sich Anteile von 100%, 80%, 60%, 40% und 20% der maximalen Leistung $p_{k,max}$.

Erfindungsgemäß sind die Raster-Positionen in der Rasteranordnung entlang einer ersten Richtung angeordnet und die kohärenten Laserstrahlen und die Mikrolinsenanordnung erfüllen die folgende Bedingung:

$$N = p_x^2\,/\,(\lambda_L\,f_E), \qquad\qquad\qquad\qquad (1)$$

wobei N eine Anzahl der entlang der ersten Richtung angeordneten Raster-Positionen, $p_x$ einen Rasterabstand der Mikrolinsen eines jeweiligen Mikrolinsen-Arrays in der ersten Richtung, $\lambda_L$ die Laserwellenlänge und $f_E$ die (effektive) Brennweite der Mikrolinsenanordnung bezeichnen. Im einfachsten Fall weist die Mikrolinsenanordnung zwei Mikrolinsenarrays mit identischer Brennweite auf, die im Abstand ihrer Brennweiten zueinander angeordnet sind. In diesem Fall stimmt die Brennweite der Mikrolinsenanordnung mit der (gemeinsamen) Brennweite der beiden Mikrolinsen-Arrays überein.

Für den Fall, dass eine gerade Anzahl N von kohärenten Laserstrahlen entlang einer Richtung kombiniert werden soll, ist es typischerweise erforderlich, in der Strahlkombinationseinrichtung die 0-te Beugungsordnung zu eliminieren. Zu diesem Zweck kann beispielsweise eine Phasenschiebe-Einrichtung z.B. in Form eines Phasenschiebeberelements verwendet werden, welches die 0-te Beugungsordnung durch destruktive Interferenz unterdrückt oder eines der Mikrolinsen-Arrays kann zu diesem Zweck lateral bzw. quer zur Propagationsrichtung des kombinierten Laserstrahls relativ zum anderen Mikrolinsen-Array verschoben werden, wie dies in der DE 10 2018 211 971.6 bzw. in der PCT/EP2019/069324 beschrieben ist, die in ihrer Gesamtheit durch Bezugnahme zum Inhalt dieser Anmeldung gemacht werden. Grundsätzlich ist es auch möglich, die Phasen-Einstelleinrichtungen dazu zu verwenden, die jeweiligen Phasen der kohärenten Laserstrahlen so einzustellen, dass die 0-te Beugungsordnung eliminiert wird.

Für den Fall, das die Raster-Positionen in der Rasteranordnung zusätzlich entlang einer zweiten, bevorzugt zur ersten senkrechten Richtung angeordnet sind, erfüllen die kohärenten Laserstrahlen und die Mikrolinsenanordnung typischerweise zusätzlich folgende Bedingung:

$$M = p_Y^2 \, / \, (\lambda_L \, f_E), \qquad\qquad\qquad (2)$$

wobei M eine Anzahl der entlang der zweiten Richtung angeordneten Raster-Positionen und $p_Y$ einen Rasterabstand der Mikrolinsen eines jeweiligen Mikrolinsen-Arrays in der zweiten Richtung bezeichnen.

Die Erfinder haben erkannt, dass bei der Kombination zu dem kombinierten Laserstrahl die Strahlqualität eines einzelnen kohärenten Laserstrahls nahezu vollständig erhalten bleibt, wenn obige Gleichung (1) bzw. (2) erfüllt ist. Hierbei wird ausgenutzt, dass eine Mikrolinsenanordnung bzw. ein abbildender Homogenisierer, der mit einem kohärenten, kollimierten Laserstrahl bestrahlt wird, für den Fall, dass die Gleichung (1) erfüllt ist, ein Beugungsmuster mit N Beugungs-Spots gleicher Intensität erzeugt, vgl. den Artikel von M. Zimmermann et al. "Refractive Micro-optics for Multi-spot and Multi-line Generation", Proceedings of LPM2008-the 9th International Symposium on Laser Precision Microfabrication. Die Erfinder schlagen vor, den Strahlweg durch den abbildenden Homogenisierer umzukehren und an den Positionen, an denen in dem zitierten Artikel die Beugungs-Spots erzeugt werden, die Raster-Positionen anzuordnen, von denen die kohärenten Laserstrahlen ausgehen bzw. in Richtung auf die Mikrolinsenanordnung ausgesandt werden. Weisen die kohärenten Laserstrahlen eine (annähernd) gleiche Intensität auf, wird bei der Umkehrung der Strahlrichtung ein kombinierter, kohärenter Laserstrahl hoher Strahlqualität erzeugt.

Es versteht sich, dass die Gleichung (1) in der Praxis nicht exakt eingehalten werden kann. Für den Fall, dass von der Gleichung (1) abgewichen wird, verschlechtert sich die Strahlqualität des überlagerten Laserstrahls. Im Sinne dieser Anmeldung wird die obige Gleichung (1) als erfüllt angesehen, wenn die rechte Seite der Gleichung (1) um nicht mehr als 20%, bevorzugt um nicht mehr als 10%, insbesondere um nicht mehr als 5% vom (ganzzahligen) Wert N auf der linken Seite der Gleichung (1) abweicht, d.h. wenn gilt: $|N - p_x^2 \, / \, (\lambda_L \, f_E)| < 0{,}2$, bevorzugt $< 0{,}1$, insbesondere $< 0{,}05$. Entsprechendes gilt auch für Gleichung (2), d.h. $|M - p_y^2 \, / \, (\lambda_L \, f_E)| < 0{,}2$, bevorzugt $< 0{,}1$, insbesondere $< 0{,}05$.

Die Mikrolinsenanordnung kann mindestens drei Mikrolinsen-Arrays aufweisen und insbesondere zur Einstellung ihrer (effektiven) Brennweite $f_E$ ausgebildet sein, wie dies in der DE 10 2018 211 971.6 bzw. in der PCT/EP2019/069324 beschrieben ist. Die Einstellung der Brennweite der Mikrolinsenanordnung ist erforderlich, wenn die Anzahl N bzw. M der kohärenten Laserstrahlen, die für die Kombination verwendet werden, verändert wird und weiterhin die Gleichung (1) bzw. (2) erfüllt sein soll, da die anderen Parameter in Gleichung (1) bzw. (2), d.h. die Laserwellenlänge $\lambda_L$ und der Rasterabstand $p_x$ bzw. $p_y$ der Mikrolinsen, nicht ohne weiteres verändert werden können.

Im einfachsten Fall wird ein jeweiliges Mikrolinsen-Array der Mikrolinsenanordnung durch ein eigenes Multilinsen-Array-Bauteil realisiert. Es ist aber auch möglich, dass mehrere Mikrolinsen-Arrays im Strahlpfad durch ein einziges Mikrolinsenarray-Bauteil realisiert werden, indem der Strahlpfad dieses Mikrolinsenarray-Bauteil entsprechend mehrfach durchläuft, beispielsweise weil der Strahlpfad an einem reflektierenden optischen Element umgelenkt wird.

Bei einer weiteren Ausführungsform ist die Vorrichtung ausgebildet, in der ersten Richtung benachbarte kohärente Laserstrahlen mit einer vorgegebenen Winkeldifferenz $\delta\theta$ in die Mikrolinsenanordnung einzukoppeln, für die gilt:

$$\delta\theta = \lambda_L \, / \, p_{x,}$$

wobei $\lambda_L$ die Laserwellenlänge und $p_x$ einen Rasterabstand der Mikrolinsen eines jeweiligen Mikrolinsen-Arrays in der ersten Richtung bezeichnen. Für die Kombination der kohärenten Laserstrahlen zu einem kombinierten Laserstrahl ist es typischerweise erforderlich bzw. günstig, wenn benachbarte kohärente Laserstrahlen mit der weiter oben angegebenen

Winkeldifferenz $\delta\theta$ in die Mikrolinsenanordnung eingekoppelt werden. Um diese Bedingung zu erfüllen, können die Raster-Positionen, von denen die kohärenten Laserstrahlen ausgehen, unter der jeweiligen Winkeldifferenz $\delta\theta$ zueinander ausgerichtet werden und beispielsweise äquidistant auf einem Kreisbogen angeordnet sein. Eine Fokussierung der kohärenten Laserstrahlen kann in diesem Fall beispielsweise mit Hilfe von Einzellinsen oder mit einem weiteren Mikrolinsen-Array erfolgen, die im jeweiligen Strahlweg eines der kohärenten Laserstrahlen angeordnet sind, es kann ggf. aber auch auf das Vorsehen solcher Linsen verzichtet werden. Eine entsprechende Bedingung gilt für die Winkeldifferenz zwischen benachbarten kohärenten Laserstrahlen in der zweiten Richtung, d.h. es gilt: $\delta\theta = \lambda_L / p_y$. Die oben angegebene Bedingung gilt als erfüllt, wenn gilt: $| \delta\theta - \lambda_L / p_x | < 0{,}2$, bevorzugt $< 0{,}1$, insbesondere $< 0{,}05$.

Bei einer weiteren Ausführungsform weist die Vorrichtung eine Einkoppeloptik zur Einkopplung der kohärenten Laserstrahlen in die Mikrolinsenanordnung auf, wobei die Einkoppeloptik mindestens eine Fokussiereinrichtung, insbesondere mindestens eine Fokussierlinse, zur Fokussierung der Mehrzahl von kohärenten Laserstrahlen auf die Mikrolinsenanordnung aufweist. In diesem Fall wird eine Einkoppeloptik verwendet, die zwischen den Raster-Positionen, von denen die kohärenten Laserstrahlen ausgehen, und der Mikrolinsenanordnung angeordnet ist. Für den Fall, dass die Strahlwege der kohärenten Laserstrahlen zu lang sind, um die oben angegebenen Bedingungen zu erfüllen, kann die Einkoppeloptik eine teleskopische Optik z.B. in Form von mindestens zwei Linsen aufweisen.

Die Einkoppeloptik ist nicht zwingend erforderlich, kann aber z.B. beim Einrichten des Lasersystems bzw. der Vorrichtung günstig sein. Insbesondere kann die Einkoppeloptik dazu verwendet werden, die oben angegebene Bedingung an die Winkeldifferenz $\delta\theta$ zu erfüllen, ohne dass zu diesem Zweck die Strahlaustrittsrichtungen der kohärenten Laserstrahlen an den Raster-Positionen unter einem Winkel zueinander ausgerichtet werden müssen. Die Verwendung einer Fokussierlinse, die im Wesentlichen im Abstand ihrer Brennweite von der Mikrolinsenanordnung angeordnet ist (Fourier-Linse) hat sich zu diesem Zweck als günstig herausgestellt. Die kohärenten Laserstrahlen können in diesem Fall im Wesentlichen parallel zueinander ausgerichtet auf die Fokussierlinse treffen und werden auf die Mikrolinsenanordnung fokussiert.

Beispielsweise können in diesem Fall die Raster-Positionen auf einer Linie angeordnet sein, d.h. die Strahlaustrittsrichtungen bzw. die Poynting-Vektoren der kohärenten Laserstrahlen sind parallel zueinander ausgerichtet. Die Verwendung bzw. die Auslegung der Einkoppeloptik und die Anordnung der Raster-Positionen hängen von den Rahmenbedingungen, beispielsweise von der verwendeten Laserquelle ab. Für den Fall, dass die Raster-Positionen die Stirnseiten von parallel verlaufenden Fasern bilden, bietet sich beispielsweise die Verwendung einer Einkoppeloptik an.

Bei einer Weiterbildung sind in der ersten Richtung benachbarte Raster-Positionen entlang einer Linie angeordnet und weisen einen Abstand $\delta x$ voneinander auf, der gegeben ist durch $\delta x = \lambda_L f_2 / p_x$, wobei $\lambda_L$ die Laserwellenlänge, $f_2$ die Brennweite der Fokussiereinrichtung und $p_x$ einen Rasterabstand der Mikrolinsen eines jeweiligen Mikrolinsen-Arrays in der ersten Richtung bezeichnen. Für den Fall, dass die Laserstrahlen parallel verlaufen, sind die Raster-Positionen typischerweise entlang einer gemeinsamen Richtung bzw. Linie (z.B. in X-Richtung) angeordnet, die senkrecht zur gemeinsamen Strahlausbreitungsrichtung der Laserstrahlen verläuft. In diesem Fall ist der Abstand $\delta x$ der Laserstrahlen bzw. der Raster-Positionen typischerweise durch die obige Bedingung festgelegt. Die oben angegebene Bedingung gilt als erfüllt, wenn gilt: $| \delta x - \lambda_L f_2 / p_x | < 0{,}2$, bevorzugt $< 0{,}1$, insbesondere $< 0{,}05$.

Weist die Fokussiereinrichtung eine Brennweite $f_2$ auf, so ist die Mikrolinsenanordnung, genauer gesagt das erste Mikrolinsen-Array der Mikrolinsenanordnung, idealerweise in der ersten Richtung in einem Abstand L2 von der Fokussiereinrichtung angeordnet, der gegeben ist durch: $L2 = f_2 - p_x^2 / (\lambda_L N)$ bzw. $L2 = f_2 - f_E$. Durch die Abweichung des Abstands L2 der Mikrolinsenanordnung um $p_x^2 / (\lambda_L N)$ von der Brennweite $f_2$ der Fokussiereinrichtung wird ein allen Laserstrahlen gemeinsamer Anteil der Phasenfront bzw. eine gemeinsame Phasenfrontkrümmung der auf die Mikrolinsenanordnung auftreffenden Laserstrahlen so eingestellt, dass die kohärenten Laserstrahlen beim Durchgang durch die Mikrolinsenanordnung bzw. durch den abbildenden Homogenisierer einen kombinierten, einzelnen Laserstrahl bilden. Die Bedingung an den Abstand L2 gilt auch als erfüllt, wenn die rechte Seite um weniger als 5%, bevorzugt um weniger als 2% von der linken Seite abweicht. Für den Fall, dass die Raster-Positionen in einer zweidimensionalen Anordnung angeordnet sind, gilt für den Rasterabstand $p_y$ der Mikrolinsen in der zweiten Richtung analog: $L2' = f_2 - p_y^2 / (\lambda_L M)$, wobei M die Anzahl der Raster-Positionen in der zweiten Richtung bezeichnet. Der Abstand L2' in der zweiten Richtung wird bis zum ersten Mikrolinsen-Array gemessen, welches eine Strahlformung in der zweiten Richtung vornimmt und kann daher vom Abstand L2 in der ersten Richtung abweichen.

Die beanspruchte Erfindung betrifft ein Lasersystem, umfassend: eine Seed-Laserquelle zur Erzeugung eines Seed-Laserstrahls, sowie eine Vorrichtung wie weiter oben beschrieben zur Kombination der Mehrzahl von kohärenten Laserstrahlen, wobei der Seed-Laserstrahl bevorzugt den Eingangs-Laserstrahl der Vorrichtung bildet. Die Seed-Laserquelle ist bevorzugt ausgebildet, den Seed-Laserstrahl mit einer spektralen Bandbreite von weniger als 100 nm, besonders bevorzugt von weniger als 50 nm, insbesondere von weniger als 10 nm sowie bevorzugt mit einem räumlichen Grundmode (Single-Mode-Laserstrahl) zu erzeugen. Der Seed-Laserstahl kann der Vorrichtung direkt bzw. über geeignete strahlführende optische Elemente zugeführt werden. Der Seed-Laserstrahl kann vor dem Eintritt in die weiter oben beschriebene Vorrichtung in mindestens einem optischen Verstärker verstärkt werden. Insbesondere in diesem Fall kann auf das Vorsehen von Verstärkern, z.B. in Form von Verstärker-Fasern, zur Verstärkung der einzelnen kohärenten Laserstrahlen in der Vorrichtung ggf. vollständig verzichtet werden. Durch die Verstärkung des Seed-Laserstrahls vor dem Eintritt in die Vorrichtung kann ggf. auf eine aktive Regelung der Phasen der einzelnen kohärenten Laserstrahlen verzichtet werden. In diesem Fall kann an den jeweiligen Phasen-Einstelleinrichtungen eine statische - bzw. zur gezielten Veränderung der jeweiligen Beugungsordnung variierende - Phase eingestellt werden, die nicht nachgeregelt werden muss. Alternativ ist es möglich, dass es sich bei dem Eingangs-Laserstrahl selbst um einen kombinierten Laserstrahl handelt, wie nachfolgend näher beschrieben ist.

Bei einer Ausführungsform umfasst das Lasersystem zusätzlich eine weitere Vorrichtung zur Kombination einer Mehrzahl von weiteren kohärenten Laserstrahlen, umfassend: eine weitere Aufteilungseinrichtung zur Aufteilung des Seed-Laserstrahls bzw. des (weiteren) Eingangs-Laserstrahls auf die Mehrzahl von weiteren kohärenten Laserstrahlen, eine Mehrzahl von weiteren Phasen-Einstelleinrichtungen zur Einstellung einer jeweiligen Phase eines der weiteren kohärenten Laserstrahlen, sowie eine weitere Strahlkombinationseinrichtung zur Kombination der weiteren kohärenten Laserstrahlen, die von einer Mehrzahl von weiteren Raster-Positionen einer weiteren Rasteranordnung ausgehen, wobei die weitere Strahlkombinationseinrichtung eine weitere Mikrolinsenanordnung mit mindestens zwei weiteren Mikrolinsen-Arrays aufweist, sowie eine weitere Steuerungseinrichtung, die zur Einstellung der jeweiligen Phase eines der weiteren kohärenten Laserstrahlen in Abhängigkeit von einer Anordnung der jeweiligen weiteren Raster-Position innerhalb der weiteren Rasteranordnung ausgebildet ist, um die kohärenten weiteren Laserstrahlen zu einem in die nullte Beugungsordnung oder in einen von der nullten verschiedene Beugungsordnung gebeugten Laserstrahl zu kombinieren, welcher den Eingangs-Laserstrahl der Aufteilungseinrichtung der Vorrichtung bildet.

Die weitere Steuerungseinrichtung der weiteren Vorrichtung ist in diesem Fall ausgebildet bzw. programmiert, die weiteren kohärenten Laserstrahlen zu einem in die nullte Beugungsordnung oder in eine von der nullten verschiedene Beugungsordnung gebeugten Laserstrahl zu kombinieren, indem die weiter oben in Zusammenhang mit der Vorrichtung beschriebenen Grund-Phasen eingestellt werden.

Bei dieser Ausführungsform wird eine weitere Vorrichtung zur Kombination einer Mehrzahl von weiteren kohärenten Laserstrahlen dazu verwendet, um den Eingangs-Laserstrahl für die weiter oben beschriebene Vorrichtung zu erzeugen. Die weitere Vorrichtung wird in diesem Fall dazu verwendet, um aus dem Seed-Laserstrahl einen verstärkten kombinierten weiteren Laserstrahl zu bilden, der den Eingangs-Laserstrahl der Vorrichtung bildet. Auch in diesem Fall kann auf das Vorsehen von Verstärkern innerhalb der Vorrichtung, insbesondere im Strahlweg nach der Aufteilungseinrichtung, ggf. vollständig verzichtet werden. Da in die Vorrichtung ein verstärkter Eingangs-Laserstrahl eingekoppelt wird, kann ggf. auf eine aktive Phasen-Einstellung bzw. Phasen-Regelung in der Vorrichtung verzichtet werden, so dass die Ablenkung des mindestens einen kombinierten Laserstrahls in der Vorrichtung nicht durch eine Phasen-Regelung verlangsamt wird. Eine in der weiteren Vorrichtung zur Kombination der weiteren kohärenten Laserstrahlen vorgesehene aktive Stabilisierung der Phasen-Einstellungen mittels eines Regelkreises vereinfacht sich in diesem Fall, da nur auf die nullte Beugungsordnung stabilisiert werden muss.

Ein weiterer Aspekt der Erfindung betrifft ein Verfahren der eingangs genannten Art zum Kombinieren einer Mehrzahl von kohärenten Laserstrahlen, weiter umfassend: Einstellen einer jeweiligen Phase eines der kohärenten Laserstrahlen in Abhängigkeit von einer Anordnung der jeweiligen Raster-Position in der Rasteranordnung zum Kombinieren der kohärenten Laserstrahlen zu mindestens einem in eine von der nullten Beugungsordnung verschiedene Beugungsordnung gebeugten Laserstrahl und/oder Variieren der jeweiligen Phase der kohärenten Laserstrahlen in Abhängigkeit von einer Anordnung der jeweiligen Raster-Position innerhalb der Rasteranordnung, um eine Beugungsordnung zu verändern, in die der mindestens eine kombinierte Laserstrahl gebeugt wird. Durch die Variation der Phasen kann ein hochdynamischer, diskreter Scanprozess in einer oder in zwei Richtungen erfolgen.

Wie weiter oben in Zusammenhang mit der Vorrichtung beschrieben wurde, wird auch bei dem Verfahren zum Kombinieren der Mehrzahl von Laserstrahlen gezielt von den Grund-Phasen bzw. von Phasenunterschieden zwischen den kohärenten Laserstrahlen für eine im Hinblick auf die Strahlqualität optimierte Kombination in der nullten oder in einer höheren Beugungsordnung abgewichen, um eine kontrollierte Strahlablenkung bzw. eine kontrollierte Strahlteilung vorzunehmen. Bei einer Strahlablenkung bzw. Strahlteilung mit geeignet gewählten zusätzlichen Phasen der einzelnen kohärenten Laserstrahlen resultiert kein Effizienzverlust für die jeweilige Beugungsordnung. Die zusätzlichen Phasen der einzelnen kohärenten Laserstrahlen können insbesondere die weiter oben in Zusammenhang mit dem Lasersystem bzw. mit der Vorrichtung angegebenen Gleichungen für $\Delta\varphi_a$ bzw. für $\Delta\varphi_{a,b}$ erfüllen. Auch die Grund-Phasen $\delta\varphi_a$ bzw. $\delta\varphi_{a,b}$ erfüllen typischerweise die weiter oben in Zusammenhang mit der Vorrichtung beschriebenen Gleichungen.

Bei einer weiteren Variante umfasst das Verfahren: Variieren der jeweiligen zusätzlichen Phasen der kohärenten Laserstrahlen zur Veränderung einer ersten Beugungsordnung, in die ein erster kombinierter Laserstrahl gebeugt wird, und/oder zur Veränderung einer zweiten Beugungsordnung, in die ein zweiter kombinierter Laserstrahl gebeugt wird ausgehend von einer jeweiligen Grund-Phase, bei der die Strahlkombinationseinrichtung die kohärenten Laserstrahlen zu einem einzigen in die nullte Beugungsordnung oder in eine von der nullten Beugungsordnung verschiedene Beugungsordnung gebeugten Laserstrahl kombiniert. Wie weiter oben beschrieben wurde, kann durch die Variation der Phasen eine hochdynamische Strahlteilung realisiert werden, bei welcher zwei, drei oder ggf. mehr (maximal N bzw. N x M) kombinierte Laserstrahlen erzeugt und/oder die Position bzw. die Ausrichtung von maximal N-1 bzw. maximal (N-1) x (M -1) kombinierten Laserstrahlen verändert werden können.. Es versteht sich, dass der weiter oben in Zusammenhang mit einem einzigen kombinierten Laserstrahl beschriebene Scanprozess auch mit der Aufteilung auf zwei oder mehr kombinierte Laserstrahlen kombiniert werden kann.

Bei einer weiteren Variante umfasst das Verfahren: Einstellen einer jeweiligen zusätzlichen Phase der kohärenten Laserstrahlen zur Erzeugung einer vorgegebenen, insbesondere unterschiedlichen Leistung der mindestens zwei in verschiedene Beugungsordnungen gebeugten kombinierten Laserstrahlen ausgehend von einer jeweiligen Grund-Phase, bei der die Strahlkombinationseinrichtung die kohärenten Laserstrahlen zu einem einzigen in die nullte Beugungsordnung oder in eine von der nullten Beugungsordnung verschiedene Beugungsordnung gebeugten Laserstrahl kombiniert. Wie weiter oben in Zusammenhang mit der Vorrichtung beschrieben wurde, kann die Eingangs-Leistung auf die zwei oder mehr kombinierten Laserstrahlen gleich verteilt werden, es ist aber auch möglich, gezielt von einer Gleichverteilung auf die Mehrzahl von kombinierten Laserstrahlen abzuweichen.

Wie weiter oben beschrieben wurde, ist es günstig, wenn die kohärenten Laserstrahlen und die Mikrolinsenanordnung die oben angegebenen Bedingungen $N = p_x^2 / (\lambda_L f_E)$ bzw. $M = p_Y^2 / (\lambda_L f_E)$ erfüllen (wobei von einer identischen Brennweite $f_E$ ausgegangen wird). Auch ist es vorteilhaft, wenn benachbarte kohärente Laserstrahlen mit einer vorge-gebenen Winkeldifferenz $\delta\theta_x$ bzw. $\delta\theta_y$ in die Mikrolinsenanordnung eingekoppelt werden, für die gilt: $\delta\theta_x = \lambda_L / p_x$ bzw. $\delta\theta_y = \lambda_L / p_y$.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a-c eine schematische Darstellung eines Lasersystems mit einer Vorrichtung zur Kombination einer Mehrzahl von kohärenten Laserstrahlen, die in einer Mehrzahl von Verstärker-Fasern verstärkt werden,

Fig. 1b eine schematische Darstellung eines Lasersystems analog zu Fig. 1a, bei dem der Vorrichtung ein verstärkter Seed-Laserstrahl zugeführt wird,

Fig. 1c eine schematische Darstellung eines Lasersystems analog zu Fig. 1b mit einer weiteren Vorrichtung zur Kombination von kohärenten Laserstrahlen, die zur Verstärkung des Seed-Laserstrahls dient,

Fig. 2 eine Darstellung einer Strahlkombinationseinrichtung des Lasersystems von Fig. 1a-c, die eine Einkoppeloptik und eine Mikrolinsenanordnung mit zwei Mikrolinsen-Arrays umfasst,

Fig. 3a,b Darstellungen einer eindimensionalen Anordnung von fünf kohärenten Laserstrahlen mit einer jeweils zugeordneten zusätzlichen Phase zur Erzeugung eines einzigen gebeugten Laserstrahls,

Fig. 4a,b Darstellungen des Fernfeldes der Strahlkombinationseinrichtung bei Verwendung der in Fig. 3a,b gezeigten Phasen,

Fig. 5a,b Darstellungen des Fernfeldes der Strahlkombinationseinrichtung von Fig. 2, bei dem die Phasen der kohärenten Laserstrahlen so gewählt sind, dass der kombinierte Laserstrahl in zwei unterschiedliche Beugungsordnungen gebeugt wird,

Fig. 6a-c Darstellungen von drei Strahlkombinationseinrichtungen, bei denen die Raster-Positionen jeweils in einer zweidimensionalen Rasteranordnung angeordnet sind,

Fig. 7 eine Darstellung einer zweidimensionalen Anordnung von 5 x 5 kohärenten Laserstrahlen mit einer jeweils zugeordneten zusätzlichen Phase zur Erzeugung eines einzigen oder mehrerer gebeugter Laserstrahlen,

Fig. 8 eine Darstellung des Fernfeldes der Strahlkombinationseinrichtung, bei dem die Phasen so gewählt sind, dass der kombinierten Laserstrahl in genau eine Beugungsordnung gebeugt wird, sowie

Fig. 9 eine Darstellung des Fernfeldes der Strahlkombinationseinrichtung, bei dem die Phasen so gewählt sind, dass zwei kombinierte Laserstrahlen in zwei unterschiedliche Beugungsordnungen gebeugt werden.

In der folgenden Beschreibung der Zeichnungen werden für gleiche bzw. funktionsgleiche Bauteile identische Bezugszeichen verwendet.

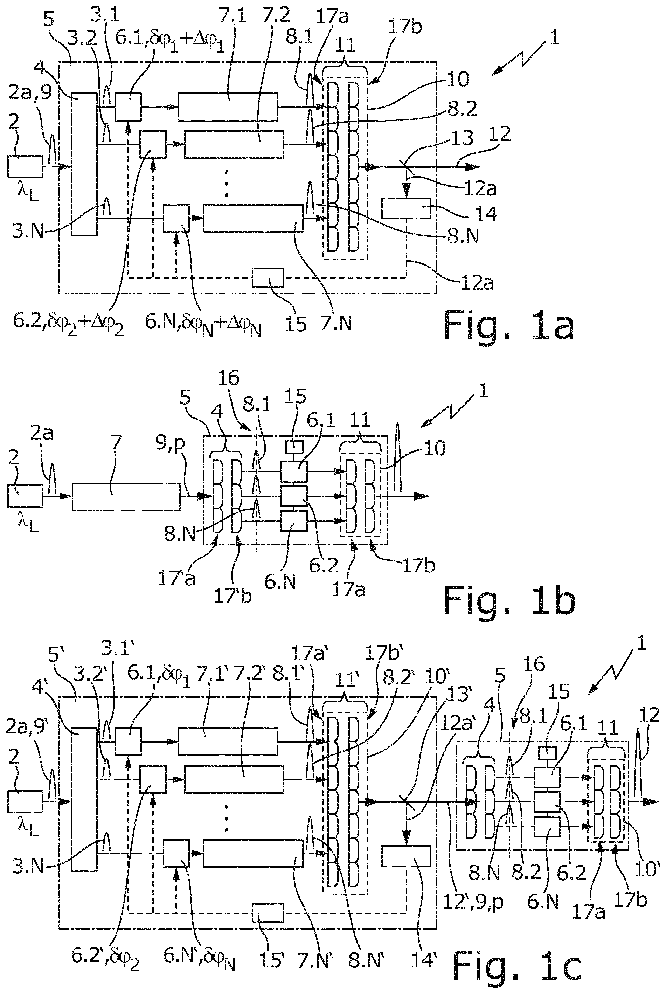

Fig. **1a** zeigt einen beispielhaften Aufbau eines Lasersystems 1, welches eine Laserquelle 2 zur Erzeugung eines Seed-Laserstrahls 2a aufweist. Die Laserquelle 2 weist zu diesem Zweck einen modengekoppelten Faser-Master-Oszillator auf, der den Seed-Laserstrahl 2a mit einer Laserwellenlänge $\lambda_L$ erzeugt. Der Seed-Laserstrahl 2a der Laserquelle 2 wird als Eingangs-Laserstrahl 9 einer Vorrichtung 5 zur Kombination einer Anzahl N von kohärenten Laserstrahlen 3.1, 3.2, ..., 3.N zugeführt. Die Vorrichtung 5 weist eine herkömmliche 1-zu-N-Aufteilungseinrichtung 4, beispielsweise in Form eines Faser-Splitters, auf, um den Eingangs-Laserstrahl 9, welcher dem Seed-Laserstrahl 2a entspricht, in die Anzahl N von kohärenten Laserstrahlen 3.1,..., 3.N aufzuteilen. Die kohärenten Laserstrahlen 3.1, ..., 3.N durchlaufen eine entsprechende Anzahl N von Phasen-Einstelleinrichtungen 6.1, ..., 6.N, welche die Einstellung einer jeweiligen individuellen Phase $\delta\varphi_a + \Delta\varphi_a$ der kohärenten Laserstahlen 3.1, ..., 3.N (a = 1, ..., N) ermöglichen, indem sie eine geeignete Phasen-Verzögerung bewirken. Die Phasen-Einstelleinrichtungen 6.1, ..., 6.N können beispielsweise als Elektro-optische Modulatoren oder Deflektoren, z.B. unter Verwendung von Flüssigkristallen, als akusto-optische Modulatoren oder Deflektoren, als elektro-mechanische Modulatoren oder Deflektoren, z.B. in Form von aktuierbaren Piezo-Spiegeln, etc. ausgebildet sein.

Nach den Phasen-Einstelleinrichtungen 6.1, ..., 6.N durchlaufen die kohärenten Laserstrahlen 3.1, ..., 3.N eine entsprechende Anzahl N von Verstärker-Fasern 7.1, ..., 7.N, um die kohärenten Laserstrahlen 3.1, ..., 3.N zu verstärken. Die Stirnseiten der Verstärker-Fasern 7.1, ..., 7.N dienen als Emissionsflächen bzw. diese bilden Raster-Positionen 8.1, ..., 8.N, an denen die kohärenten Laserstrahlen 3.1, ..., 3.N emittiert werden. Die Phasen-Einstelleinrichtungen 6.1, ..., 6.N können auch hinter den Verstärker-Fasern 7.1, ..., 7.N angeordnet sein oder direkt auf die Verstärker-Fasern 7.1, ..., 7.N einwirken, beispielsweise indem diese eine einstellbare mechanische Spannung auf die Verstärker-Fasern 7.1, ..., 7.N erzeugen.

Die kohärenten Laserstrahlen 3.1, ..., 3.N können an einer nicht bildlich dargestellten Umlenkeinrichtung, die eine Mehrzahl von Umlenkspiegeln aufweist, umgelenkt werden, um den Füllfaktor zu erhöhen, d.h. um den Abstand zwischen benachbarten Laserstrahlen 3.1, ..., 3.N bzw. Raster-Positionen 8.1, ..., 8.N zu verringern. Es versteht sich, dass die Umlenkeinrichtung nicht zwingend erforderlich ist. Die kohärenten Laserstrahlen 3.1, ..., 3.N treten im gezeigten Beispiel parallel zueinander ausgerichtet in eine Strahlkombinationseinrichtung 10 ein, die eine Mikrolinsenanordnung 11 bzw. einen abbildenden Homogenisierer mit zwei Mikrolinsen-Arrays 17a,b zur kohärenten Kombination der Laserstrahlen 3.1, ..., 3.N für die Bildung eines kombinierten Laserstrahls 12 oder von mehreren kombinierten Laserstrahlen 12a,b aufweist (letzteres ist in Fig. 1a nicht gezeigt).

Wie in Fig. 1a zu erkennen ist, wird ein Anteil 12a des kombinierten Laserstrahls 12 über eine Auskoppeleinrichtung in Form eines teiltransmissiven Spiegels 13 ausgekoppelt und trifft auf einen ortsauflösenden Detektor 14, z.B. in Form eines Sensor-Arrays oder einer Kamera. Der Detektor 14 steht mit einer Steuerungseinrichtung 15 des Lasersystems 1 in signaltechnischer Verbindung, welche die Phasen-Einstelleinrichtungen 6.1, ..., 6.N ansteuert, um die individuellen Phasen $\delta\varphi_a + \Delta\varphi_a$ der Laserstrahlen 3.1, ..., 3.N in Abhängigkeit von den Eigenschaften des detektierten Anteils 12a des kombinierten Laserstrahls 12 anzupassen. Die Steuerungseinrichtung 15 kann insbesondere eine Regelung der Phasen-Einstelleinrichtungen 6.1, ..., 6.N zur Erzeugung von gewünschten (Soll-)Phasen $\delta\varphi_a + \Delta\varphi_a$ der Laserstahlen 3.1, ..., 3.N in Abhängigkeit von den Eigenschaften des detektierten Anteils 12a des kombinierten Laserstrahls 12 ermöglichen.

Obgleich im gezeigten Beispiel die Anzahl N von Phasen-Einstelleinrichtungen 6.1, ..., 6.N der Mehrzahl N von Laserstrahlen 3.1, ..., 3.N entspricht, ist in der Regel eine Anzahl von N - 1 Phasen-Einstelleinrichtungen 6.1, ..., 6.N-1 ausreichend. Bei dem in Fig. 1a gezeigten Lasersystem 1 kann einerseits eine hohe Strahlqualität von z.B. M = 1,3 des kombinierten Laserstrahls 12 erreicht werden, andererseits kann durch die Verstärkung in den Verstärker-Fasern 7.1, ..., 7.N eine deutliche Erhöhung der Leistung der Laserstrahlen 3.1, ..., 3.N erreicht werden.

Fig. **1b** zeigt ein Lasersystem 1, welches sich von dem in Fig. 1a gezeigten Lasersystem 1 im Wesentlichen dadurch unterscheidet, dass die kohärenten Laserstrahlen 3.1, ..., 3.N in der Vorrichtung 5 nicht mit Hilfe einer Mehrzahl von Verstärker-Fasern 7.1, ..., 7.N. oder mit Hilfe von anderen optischen Verstärkern verstärkt werden. Bei dem in Fig. 1b gezeigten Lasersystem 1 wird vielmehr der Seed-Laserstrahl 2a in einer Verstärker-Faser 7 verstärkt. Der verstärkte Seed-Laserstrahl 2a wird der Vorrichtung 5 als Eingangs-Laserstrahl 9 zugeführt. Die Vorrichtung 5 von Fig. 1b ist analog zu der in Fig. 1a gezeigten Vorrichtung 5 ausgebildet, mit dem Unterschied, dass die Raster-Positionen 8.1, ..., 8.N der kohärenten Laserstrahlen 3.1, ..., 3.N nicht an den Stirnseiten der (in Fig. 1b nicht vorhandenen) Verstärker-Fasern 7.1, ..., 7.N gebildet sind, sondern in einer Brennebene eines im Strahlengang zweiten Mikrolinsen-Arrays der in Fig. 1b als weitere Mikrolinsenanordnung ausgebildeten Aufteilungseinrichtung 4, d.h. im Fernfeld des zweiten weiteren Mikrolinsen-Arrays 17'b der Aufteilungseinrichtung 4.

Die Raster-Positionen 8.1, ..., 8.N der kohärenten Laserstrahlen 3.1, ..., 3.N in der Brennebene bilden eine Rasteranordnung 16, bei der benachbarte Raster-Positionen 8.1, ..., 8.N denselben Abstand voneinander aufweisen, d.h. äquidistant angeordnet sind.

Die Phasen-Einstelleinrichtungen 6.1, ..., 6.N sind bei der in Fig. 1b gezeigten Vorrichtung 1 ausgebildet, die Phasen $\delta\varphi_a + \Delta\varphi_a$ der Laserstahlen 3.1, ..., 3.N in Freistrahl-Propagation einzustellen. Bei den Phasen-Einstelleinrichtungen 6.1, ..., 6.N kann es sich beispielsweise um elektro-optische oder um akusto-optische Modulatoren oder Deflektoren handeln. Bei der in Fig. 1b gezeigten Vorrichtung 5 dient die Steuerungseinrichtung 15 ebenfalls dazu, die Phasen-Einstelleinrichtungen 6.1, ..., 6.N anzusteuern. Auf die in Zusammenhang mit Fig. 1a beschriebene aktive Regelung der Phasen $\delta\varphi_a + \Delta\varphi_a$ der Laserstahlen 3.1, ..., 3.N kann bei der in Fig. 1b gezeigten Vorrichtung 5 zumindest bei nicht zu großen Strahlungsleistungen der Laserstrahlen 3.1, ..., 3.N verzichtet werden, d.h. die Steuerungseinrichtung 15 kann die (statischen) Soll-Phasen $\delta\varphi_a + \Delta\varphi_a$ an den Phasen-Einstelleinrichtungen 6.1, ..., 6.N einstellen, ohne dass eine Nachregelung erforderlich ist. Aufgrund der nicht benötigten aktiven Phasenanpassung bzw. Regelung kann bei der Vorrichtung 5 ein schnelleres Ablenken des bzw. der kombinierten Laserstrahlen 12, 12a,b erfolgen als dies bei der in Fig. 1a gezeigten Vorrichtung 5 der Fall ist.

Fig. 1c zeigt ein Lasersystem 1, welches wie in Fig. 1b ausgebildet ist, wobei das Lasersystem 1 von Fig. 1c zur Verstärkung des Seed-Laserstrahls 2a an Stelle des in Fig. 1b gezeigten Verstärkers 7 eine weitere Vorrichtung 5' zur Kombination einer Mehrzahl N von weiteren Laserstrahlen 3.1', ...., 3.N' aufweist, die analog zu der in Fig. 1a gezeigten Vorrichtung 5 ausgebildet ist. Der weiteren Vorrichtung 5' wird der Seed-Laserstrahl 2a als Eingangs-Laserstrahl 9' zugeführt und mittels einer weiteren 1-zu-N-Aufteilungseinrichtung 4' auf eine Anzahl N von weiteren kohärenten Laserstrahlen 3.1', ..., 3.N' aufgeteilt. Die Anzahl N von weiteren kohärenten Laserstrahlen 3.1, ..., 3.N durchläuft eine entsprechende Anzahl N von weiteren Phasen-Einstelleinrichtungen 6.1', ..., 6.N', welche die Einstellung einer jeweiligen individuellen (Grund-)Phase $\delta\varphi_a$ der weiteren kohärenten Laserstahlen 3.1', ..., 3.N' (a = 1, ..., N) ermöglichen, indem sie eine geeignete Phasen-Verzögerung bewirken. Nach den weiteren Phasen-Einstelleinrichtungen 6.1', ..., 6.N' durchlaufen die weiteren kohärenten Laserstrahlen 3.1', ..., 3.N' eine entsprechende Anzahl N von weiteren Verstärker-Fasern 7.1', ..., 7.N', um die weiteren kohärenten Laserstrahlen 3.1', ..., 3.N' zu verstärken. Die Stirnseiten der weiteren Verstärker-Fasern 7.1', ..., 7.N' dienen als Emissionsflächen bzw. diese bilden weitere Raster-Positionen 8.1', ..., 8.N', an denen die weiteren kohärenten Laserstrahlen 3.1', ..., 3.N' emittiert werden. Die individuellen Phasen $\delta\varphi_a$ der weiteren kohärenten Laserstahlen 3.1', ..., 3.N' werden mit Hilfe einer weiteren Steuerungseinrichtung 15' gesteuert bzw. in Abhängigkeit von einem Detektor-Signal eines weiteren Detektors 14' geregelt, welcher einen Anteil 12a' des mit Hilfe der weiteren Vorrichtung 5' kombinierten weiteren Laserstahls 12' detektiert, der an einer weiteren Auskoppeleinrichtung 13' ausgekoppelt wird.

Die Steuerungseinrichtung 15' der in Fig. 1c gezeigten weiteren Vorrichtung 5' ist ausgebildet bzw. programmiert, die individuellen (Grund-)Phasen $\delta\varphi_a$ der weiteren kohärenten Laserstrahlen 3.1', ..., 3.N' in Abhängigkeit von einer Anordnung der dem jeweiligen weiteren Laserstrahl 3.1', ..., 3.N' zugeordneten weiteren Raster-Position 8.1', ..., 8.N' so einzustellen, dass die kohärenten weiteren Laserstrahlen 3.1', ..., 3.N' zu einem in die nullte Beugungsordnung gebeugten Laserstrahl 12' kombiniert werden. Der kombinierte Laserstrahl 12' bildet den Eingangs-Laserstrahl 9 für die Vorrichtung 5 zur Kombination der kohärenten Laserstrahlen 3.1, ..., 3.N, die wie in Fig. 1b dargestellt ausgebildet ist. Durch die Verstärkung des Seed-Laserstrahls 5 in der weiteren Vorrichtung 5' kann wie in Fig. 1b auf die Verstärkung des Eingangs-Laserstrahls 9 in der Vorrichtung 5 verzichtet werden.

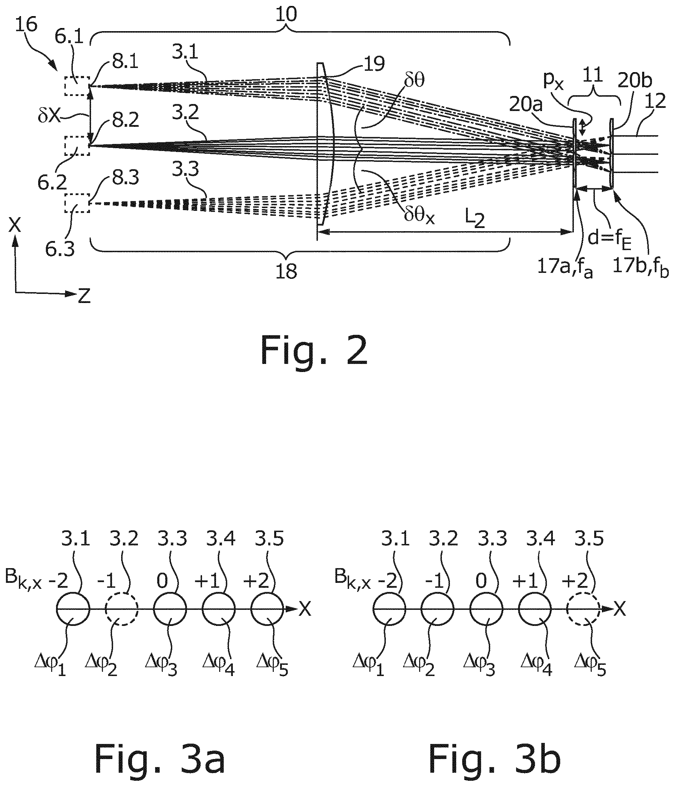

Fig. 2 zeigt eine Strahlkombinationseinrichtung 10 analog zur Vorrichtung 5 von Fig. 1a-c zur Kombination einer (beispielhaften) Anzahl von N = 3 kohärenten Laserstrahlen 3.1, 3.2, 3.3. Die Strahlkombinationseinrichtung 10 weist eine Mikrolinsenanordnung 11 mit zwei Mikrolinsen-Arrays 17a,b sowie eine Einkoppeloptik 18 auf. In Fig. 2 ebenfalls dargestellt sind drei Phasen-Einstelleinrichtungen 6.1, 6.2, 6.3 zur Einstellung der Phasen $\delta\varphi_1 + \Delta\varphi_1$, $\delta\varphi_2 + \Delta\varphi_2$, $\delta\varphi_3 + \Delta\varphi_3$ der drei Laserstrahlen 3.1, 3.2, 3.3 derart, dass sich in Kombination mit der Einkoppeloptik 18 eine Phasenfront an der Mikrolinsenanordnung 11 ausbildet, welche eine kohärente Kombination der Laserstrahlen 3.1, 3.2, 3.3 zu dem kombinierten Laserstrahl 12 möglichst unter vollständiger Erhaltung der Strahlqualität ermöglicht. Die Raster-Positionen 8.1, 8.2, 8.3 sind hierbei entlang einer Linie in X-Richtung angeordnet und die Laserstrahlen 3.1, 3.2, 3.3 treten parallel ausgerichtet entlang einer einheitlichen Ausbreitungsrichtung (Z-Richtung) in die Einkoppeloptik 18 ein.

Die Raster-Positionen 8.1, 8.2, 8.3 bzw. die kohärenten Laserstrahlen 3.1, 3.2, 3.3 sind hierbei äquidistant, d.h. in gleichen Abständen $\delta x$, entlang der X-Richtung angeordnet. Die Einkoppeloptik 18 ist ausgebildet, benachbarte kohärente Laserstrahlen 3.1, 3.2, 3.3 mit einer vorgegebenen Winkeldifferenz $\delta\theta$ in die Mikrolinsenanordnung 11 einzukoppeln, für die gilt: $\delta\theta = \lambda_L / p_x$, wobei $\lambda_L$ die (einheitliche) Wellenlänge der Laserstrahlen 3.1, 3.2, 3.3 und $p_x$ einen Rasterabstand (pitch) der Mikrolinsen 20a,b eines jeweiligen Mikrolinsen-Arrays 17a,b in X-Richtung bezeichnen.

Um die Winkeldifferenz $\delta\theta$ zu erzeugen, weist die Einkoppeloptik 18 eine Fokussiereinrichtung in Form einer Fokussierlinse 19, genauer gesagt einer Zylinderlinse, auf, welche die Laserstrahlen 3.1, 3.2, 3.3 auf die Mikrolinsenanordnung 11, genauer gesagt auf das erste Mikrolinsen-Array 17a der Mikrolinsenanordnung 11, fokussiert. Um die Bedingung an die Winkeldifferenz $\delta\theta$ zu erfüllen, sind bei dem in Fig. 2 gezeigten Beispiel die Raster-Positionen 8.1, 8.2, 8.3 in einer eindimensionalen Rasteranordnung 16 in einem Abstand $\delta x$ angeordnet, der gegeben ist durch $\delta x = \lambda_L f_2 / p_x$, wobei $f_2$ die Brennweite der Fokussierlinse 19 bezeichnet, die in Fig. 2 in einem Abstand L2 von der Mikrolinsenanordnung 11 angeordnet ist. Für den Abstand L2 gilt im gezeigten Beispiel: $f_2 - p_x^2 / (N \lambda_L)$. Für den Fall, dass die Einkoppeloptik 18 eine weitere Optik aufweist, wie dies beispielsweise in der DE 10 2018 211 971.6 bzw. in der PCT/EP2019/069324 beschrieben ist, kann der Abstand L2 auch mit der Brennweite $f_2$ der Fokussierlinse 19 übereinstimmen, d.h. es gilt: $L2 = f_2$.

Alternativ zur Anordnung auf einer gemeinsamen Linie können die Raster-Positionen 8.1, 8.2, 8.3 auch in einer eindimensionalen Rasteranordnung 16 auf einem sich in X-Richtung erstreckenden Kreisbogen angeordnet sein. Hierbei sind kohärenten Laserstrahlen 3.1, 3.2, 3.3 an den jeweiligen Raster-Positionen 8.1, 8.2, 8.3 unter einem jeweiligen Differenzwinkel $\delta\theta_x = \lambda_L / p_x$ zueinander ausgerichtet.

Unter der Voraussetzung, dass die Intensitäten der von den Raster-Positionen 8.1, 8.2, 8.3 ausgehenden Laserstrahlen 3.1, 3.2, 3.3 gleich groß sind, kann mittels der Mikrolinsenanordnung 11 der in Fig. 2 gezeigte kohärent überlagerte Laserstrahl 12 erzeugt werden, wenn die Mikrolinsenanordnung 11 und die kombinierten Laserstrahlen 3.1, 3.2, 3.3 folgende Gleichung (1) erfüllen:

$$N = p_x^2 / (\lambda_L f_E)$$

wobei N die Anzahl der kohärenten Laserstrahlen (hier: N = 3) und $f_E$ die Brennweite der Mikrolinsenanordnung 11 bezeichnen. Die Gleichung (1) sollte möglichst exakt eingehalten werden, da Abweichungen zu einer Verschlechterung der Strahlqualität des kombinierten Laserstrahls 12 führen.

Im gezeigten Beispiel weisen die Mikrolinsen 20a des ersten Mikrolinsen-Arrays 17a eine erste Brennweite $f_a$ und die Mikrolinsen 20b des zweiten Mikrolinsen-Arrays 17b weisen eine zweite Brennweite $f_b$ auf, wobei gilt $f_a = f_b$. Im gezeigten Beispiel sind die beiden Mikrolinsen-Arrays 17a,b in einem Abstand d zueinander angeordnet, welcher der Brennweite $f_a$ bzw. $f_b$ und der resultierenden Brennweite $f_E$ der Mikrolinsenanordnung 11 entspricht.

Bei den Laserstrahlen 3.1, 3.2, 3.3, die von den Raster-Positionen 8.1, 8.2, 8.3 ausgehen, handelt es sich im gezeigten Beispiel um Single-Mode-Strahlen, d.h. diese weisen jeweils ein Gauß-Profil auf. Alternativ können die Laserstrahlen 3.1, 3.2, 3.3 ein anderes Strahlprofil mit einem ggf. verminderten Grad an räumlicher Kohärenz aufweisen, beispielsweise ein Donought-förmiges Strahlprofil oder ein Top-Hat-Strahlprofil. Um aus den Laserstrahlen 3.1, 3.2, 3.3 in der Mikrolinsenanordnung 11 einen kombinierten Laserstrahl 12 mit einem entsprechenden Gauß-Profil mit einer größeren Halbwerts-Breite zu bilden, ist es erforderlich, dass die Laserstrahlen 3.1, 3.2, 3.3 mit einer Phasenfront bzw. mit einzelnen (vom Einfallswinkel $\theta$ abhängigen) Grund-Phasen $\delta\varphi_a$ auf die Mikrolinsenanordnung 11 eingestrahlt werden, wie sie nachfolgend angegeben ist:

$$\delta\varphi_a = - (\pi / \lambda_L) f_E (m_a \lambda_L / p_x)^2$$

wobei p einen Rasterabstand der Mikrolinsen eines jeweiligen Mikrolinsen-Arrays, $f_E$ die Brennweite der Mikrolinsen-anordnung und $\lambda_L$ die Laserwellenlänge bezeichnen. Für den Laufindex ma gilt: $m_a = -\frac{(N+1)}{2} + a$ .

Die oben angegebene Gleichung für die Grund-Phase $\delta\varphi_a$ gilt für den Fall, dass als Aufteilungseinrichtung 4 wie in Fig. 1a als Faser-Splitter oder als andere optische Einrichtung ausgebildet ist. Für den Spezialfall der in Fig. 1b gezeigten Aufteilungseinrichtung 4, die als weitere Mikrolinsenanordnung mit zwei weiteren Mikrolinsen-Arrays 17'a, 17'b ausgebildet ist, verdoppelt sich der in der obigen Gleichung angegebene Wert für die Grund-Phasen $\delta\varphi_a$.

Die Grund-Phase $\delta\varphi_a$ unterscheidet sich für jeden einzelnen kohärenten Laserstrahl 3.1, 3.2, 3.3 und wird daher mit Hilfe der Phasen-Einstelleinrichtungen 6.1, 6.2, 6.3 und nicht mit Hilfe von einem oder mehreren optischen Elementen der Einkoppeloptik 18 eingestellt, auch wenn dies grundsätzlich ebenfalls möglich wäre.

Von der oben angegebenen Bedingung $\delta\varphi_a$ für die Grund-Phasen der kohärenten Laserstrahlen 3.1, 3.2, 3.3 wird bei der in Fig. 1a-c gezeigten Vorrichtung 5 gezielt abgewichen, um den kombinierten Laserstrahl 12 nicht in die nullte Beugungsordnung $B_0$ zu beugen, bei welcher der Laserstrahl 12 entlang der Z-Richtung propagiert, wie dies in Fig. 2 dargestellt ist, sondern in (mindestens) eine von der nullten Beugungsordnung $B_0$ verschiedene Beugungsordnung $B_{k,x}$ (in X-Richtung), bei welcher der Laserstrahl 12 unter einem Winkel zur Z-Richtung propagiert. Bei der in Fig. 1c gezeigten weiteren Vorrichtung 5' werden hingegen die Grund-Phasen $\delta\varphi_a$ der weiteren Laserstrahlen 3.1', ..., 3.N' gemäß der oben angegebenen Bedingung eingestellt, um den kombinierten Laserstrahl 12' in die nullte Beugungsordnung $B_0$ zu beugen.

Für die Beugung des Laserstrahls 12 in eine von der nullten Beugungsordnung verschiedene Beugungsordnung $B_{k,x}$ in X-Richtung ist es erforderlich, eine jeweilige zusätzliche Phase $\Delta\varphi_a$ eines kohärenten Laserstrahls 3.1, ..., 3.N an einer a-ten Raster-Position 8.1, ..., 8.N (a = 1, ..., N) einzustellen, die gegeben ist durch:

$$\Delta\varphi_a = - (2 \pi / N) (a - (N+1) / 2) B_{k,x}.$$

Hierbei bezeichnet N wie weiter oben die Anzahl der in X-Richtung in eine eindimensionalen Rasteranordnung 16 auf einer gemeinsamen Linie angeordneten Raster-Positionen 8.1, ..., 8.N und $B_{k,x}$ eine ganzzahlige positive oder negative Zahl. Die Anzahl N der Beugungsordnungen $B_{k,x}$ (inklusive der nullten Beugungsordnung $B_0$), in welche der kombinierte Laserstrahl 12 gebeugt werden kann, stimmt mit der Anzahl N der kohärenten Laserstrahlen 3.1, ..., 3.N in X-Richtung überein, d.h. es gilt k = -(N - 1)/2, ... , + (N - 1)/2 . Die jeweilige zusätzliche Phase $\Delta\varphi_a$ addiert sich zur der oben

angegebenen Grund-Phase $\delta\varphi_a$ für die kohärente Überlagerung in die 0. Beugungsordnung.

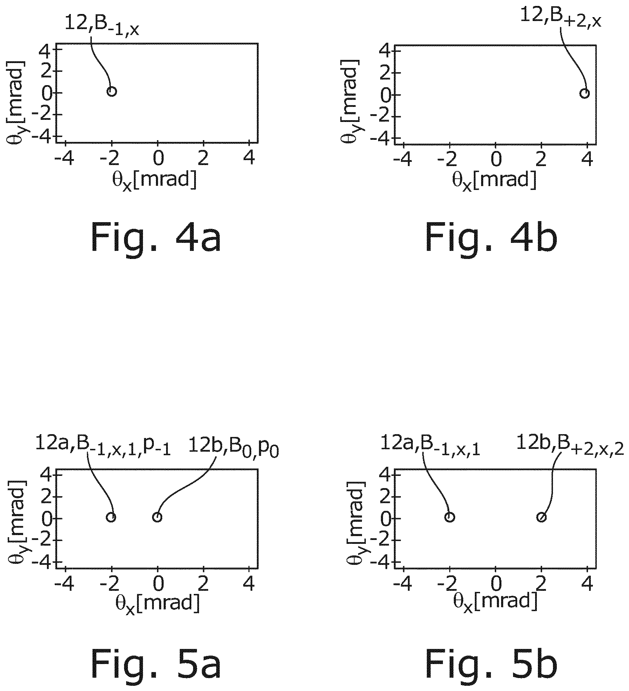

Für den weiter unten beispielhaft beschriebenen Fall von fünf kohärenten Laserstrahlen 3.1, ..., 3.5 gilt für die von der nullten Beugungsordnung $B_0$ verschiedenen Beugungsordnungen $B_{k,x}$, in welche der Laserstrahl 12 gebeugt werden kann, $B_{-2,x} = -2$, $B_{-1,X} = -1$, $B_{+1,x} = +1$ und $B_{+2,x} = +2$. In **Fig. 3a,b** ist für die fünf Laserstrahlen 3.1, ..., 3.5 eine jeweilige individuelle zusätzliche Phase $\Delta\varphi_1$, ..., $\Delta\varphi_5$ angegeben, welche die Beugung des kombinierten Laserstrahls 12 in die -1. Beugungsordnung $B_{-1,X}$ (Fig. 3a) bzw. in die +2. Beugungsordnung $B_{+2,X}$ (Fig. 3b) bewirkt. Das mittels der Strahlkombinationseinrichtung 10 erzeugte, zugehörige Fernfeld (Winkelverteilung) ist in **Fig. 4a,b** dargestellt.

Für die Einstellung der (individuellen) zusätzlichen Phasen $\Delta\varphi_a$ der Laserstrahlen 3.1, ..., 3.5, werden die Phasen-Einstelleinrichtungen 8.1, 8.2, 8.3 mit Hilfe der Steuerungseinrichtung 15 so angesteuert, dass diese für den a-ten kohärenten Laserstrahl 3.1, ..., 3.N die jeweils korrekte zusätzliche Phase $\Delta\varphi_a$ erzeugen.

Bei dem in Fig. 3a gezeigten Beispiel, d.h. bei einer Anzahl von N = 5 Laserstrahlen 3.1, ..., 3.5 und einem in die -1. Beugungsordnung $B_{-1,X}$ in X-Richtung gebeugten Laserstrahl 12 gilt für die fünf einzustellenden zusätzlichen Phasen $\Delta\varphi_1$, ..., $\Delta\varphi_5$:

$$\Delta\varphi_1 = -(2\pi/5)(-2)(-1) = -4/5\pi$$

$$\Delta\varphi_2 = -(2\pi/5)(-1)(-1) = -2/5\pi$$

$$\Delta\varphi_3 = 0$$

$$\Delta\varphi_4 = -(2\pi/5)(1)(-1) = +2/5\pi$$

$$\Delta\varphi_5 = -(2\pi/5)(2)(-1) = +4/5\pi$$

Die zusätzlichen Phasen $\Delta\varphi_1$, ..., $\Delta\varphi_5$, die zur Beugung des Laserstrahls 12 in die +2. Beugungsordnung $B_{+2,k}$ benötigt werden, werden entsprechend eingestellt und sind in Fig. 3b dargestellt.

Um einen diskreten Scanvorgang zu realisieren, bei welchem der kombinierte Laserstrahl 12 zwischen unterschiedlichen Beugungsordnungen $B_{k,x}$ hin- und her geschaltet wird, kann die Steuerungseinrichtung 15 die jeweilige zusätzliche Phase $\Delta\varphi_a$ der kohärenten Laserstrahlen 3.1, ..., 3.N variieren, indem sie auf die (schnell schaltbaren) Phasen-Einstelleinrichtungen 6.1, ..., 6.N einwirkt. Beispielsweise kann der Laserstrahl 12 von der -1. Beugungsordnung $B_{-1,X}$ in X-Richtung in die +2. Beugungsordnung $B_{+2,x}$ in X-Richtung bewegt werden, indem an Stelle der in Fig. 3a gezeigten zusätzlichen Phasen $\Delta\varphi_1$, ..., $\Delta\varphi_5$ die in Fig. 3b gezeigten zusätzlichen Phasen $\Delta\varphi_1$, ..., $\Delta\varphi_5$ eingestellt werden.

Wird das in Fig. 4a,b gezeigte Fernfeld mittels einer abbildenden Optik, z.B. einer Linse, die Teil der Strahlformungseinrichtung 10 ist, abgebildet, wird die Winkelverteilung in eine Ortsverteilung umgewandelt. Auf diese Weise kann ein einstellbarer Strahlversatz des kombinierten Laserstrahls 12 erzeugt werden, d.h. der Laserstrahl 12 kann in einem gewünschten, von der Beugungsordnung $B_{k,x}$ abhängigen Abstand in X-Richtung zur optischen Achse versetzt werden, die in Z-Richtung im Zentrum der Strahlformungseinrichtung 10 verläuft. Der Laserstrahl 12 kann hierbei insbesondere an einer (variierenden) Fokusposition in einer Fokusebene fokussiert werden.

**Fig. 5a,b** zeigen das Fernfeld der Strahlkombinationseinrichtung 10, bei dem die fünf kohärenten Laserstrahlen 3.1, ..., 3.5 zu einem ersten, in eine erste Beugungsordnung $B_{k,x,1}$ gebeugten Laserstrahl 12a und einen zweiten, in eine zweite Beugungsordnung $B_{k,x,2}$ gebeugten Laserstrahl 12b kombiniert werden. Zu diesem Zweck werden ebenfalls die zusätzlichen Phasen $\Delta\varphi_1$, ..., $\Delta\varphi_5$ der kohärenten Laserstrahlen 3.1, ..., 3.5 geeignet eingestellt. Für die Einstellung der zusätzlichen (Absolut-)Phasen $\Delta\varphi_1$, ..., $\Delta\varphi_3$ kann ein iterativer Optimierungsalgorithmus angewendet werden, der in der Steuerungseinrichtung 15 abläuft oder der bereits vorab durchgeführt wurde. In der Regel sind die für einen bestimmten Bearbeitungsprozess, beispielsweise einen Laser-Schneidprozess, einen Laser-Schweißprozess, einen Laser-Markierprozess, die additive Fertigung, etc. geeignete Phasen in Form von Datensätzen bzw. Tabellen in der Steuerungseinrichtung 15 selbst bzw. in einem mit dieser in Verbindung stehenden elektronischen Speicher hinterlegt bzw. diese werden von einem Bediener vorgegeben.

Bei dem in Fig. 5a gezeigten Beispiel sind die zusätzlichen Phasen $\Delta\varphi_1$, ..., $\Delta\varphi_3$ so gewählt, dass ein erster Laserstrahl 12a wie in Fig. 4a in die -1. Beugungsordnung $B_{-1,x,1}$ gebeugt wird und zusätzlich ein zweiter Laserstrahl 12b in die nullte Beugungsordnung $B_0$ gebeugt wird. Bei dem in Fig. 5b gezeigten Beispiel wird der erste Laserstrahl 12a wie in Fig. 4b gezeigt ist in die -1. Beugungsordnung $B_{-1,x,1}$ gebeugt, während der zweite Laserstrahl 12b in die +2. Beugungsordnung $B_{+2,x,2}$ gebeugt wird.

Die Intensität bzw. die Leistung des ersten und zweiten Laserstrahls 12a, 12b kann bei den gezeigten Beispielen gleich groß sein, d.h. die von der Seed-Laserquelle erzeugte Leistung wird auf beide Laserstrahlen 12a,b gleich verteilt. In Fig. 5a wird bei Einhaltung der oben angegebenen Bedingung für die zusätzliche Phase $\Delta\varphi_a$ die Eingangs-Leistung p, die in die Strahlkombinationseinrichtung 10 eingekoppelt wird, zu gleichen Teilen (50 : 50) auf den in die 0. Beugungsordnung gebeugten Laserstrahl 12b und auf den in die -1. Beugungsordnung gebeugten Laserstrahl 12a aufgeteilt, d.h. es gilt $p_{-1}$ = $p_0$ = p / 2.

Es ist aber auch möglich, den Anteil der Eingangs-Leistung p, der in die jeweilige Beugungsordnung $B_{k,x,1}$, $B_{k,x,2}$ gebeugt wird, gezielt abweichend von einer Gleichverteilung einzustellen. Beispielsweise kann bei dem in Fig. 5a gezeigten Beispiel ein Anteil von 80 % der Eingangs-Leistung p in die -1. Beugungsordnung gebeugt werden und ein Anteil von 20 % der Eingangs-Leistung p kann in die 0. Beugungsordnung gebeugt werden, d.h. es gilt $p_{-1}$ = 0,8 p, $p_0$ = 0,2 p. Allgemein kann die Aufteilung der Eingangs-Leistung p auf die 0. bzw. auf die $\pm 1$. Beugungsordnung beispielsweise wie folgt erfolgen: $p_0$ = C p; $p_{\pm 1}$ = (1 - C) p, mit 0 < C < 1.

Für die zusätzliche Phase $\Delta\varphi_a$ eines jeweiligen kohärenten Laserstrahls 3.1, ..., 3.N an einer a-ten Raster-Position 8.1, ..., 8.N in X-Richtung, welche die oben angegebene Leistungs-Aufteilung mit dem Faktor C erzeugt, gilt:

$$\Delta\varphi_a = C \, (2 \, \pi \, / \, N) \, (a - (N+1) \, / \, 2).$$

Der Aufteilungs-Faktor C kann von der Steuerungseinrichtung 15 konstant gewählt oder zeitabhängig verändert werden. In letzterem Fall kann die Vorrichtung 5 in der Art eines (akusto-optischen oder elektro-optischen) Modulators bzw. Deflektors betrieben werden.

Bei einer Anzahl M von mehr als zwei kombinierten Laserstrahlen 12a, 12b, ... kann die Aufteilung beispielsweise in Form einer (z.B. linearen) Leistungs-Rampe realisiert werden, bei der ein erster kombinierter Laserstrahl mit einer maximalen Leistung $p_{k,max}$ in die k-te Beugungsordnung gebeugt wird und bei der die übrigen M - 1 kombinierten Laserstrahlen mit einer in Bezug auf die maximale Leistung $p_{k,max}$ reduzierten Leistung in die übrigen M-1 Beugungsordnungen gebeugt werden. Für die Leistungs-Verteilung in Form eines Leistungs-Keils kann beispielsweise gelten: a / M $p_{k,max}$ , mit a = 1, ..., M. Für das Beispiel einer Anzahl von 5 gebeugten kombinierten Laserstrahlen ergeben sich Anteile von 100%, 80%, 60%, 40% und 20% der maximalen Leistung $p_{k,max}$.

Auch bei dem in Fig. 5a,b gezeigten Beispiel kann die Steuerungseinrichtung 15 auf die Phasen-Einstelleinrichtungen 6.1, ..., 6.N einwirken, um die zusätzlichen Phasen $\Delta\varphi_1$, ..., $\Delta\varphi_5$ der Laserstrahlen 3.1, ..., 3.N zu variieren, um dadurch die erste Beugungsordnung $B_{k,x,1}$, in welche der erste Laserstrahl 12a gebeugt wird und die zweite Beugungsordnung $B_{k,x,2}$, in welche der zweite Laserstrahl 12b gebeugt wird, zu verändern. Beispielsweise können die zusätzlichen Phasen $\Delta\varphi_1$, ..., $\Delta\varphi_5$ so variiert werden, dass der zweite Laserstrahl 12b von der nullten Beugungsordnung $B_0$ in die +2. Beugungsordnung $B_{+2,x,2}$ gebeugt wird, während die Beugung des ersten Laserstrahls 12a in die -1. Beugungsordnung $B_{-1,x,1}$ erhalten bleibt, so dass aus dem in Fig. 5a dargestellten Fernfeld das in Fig. 5b dargestellte Fernfeld erzeugt wird. Durch eine geeignete Wahl der zusätzlichen Phasen $\Delta\varphi_1$, ..., $\Delta\varphi_3$ können die kohärenten Laserstrahlen 3.1, ..., 3.5 in mehr als zwei Laserstrahlen 12a, 12b, ... kombiniert werden, die - mit gleich verteilter Leistung oder unterschiedlicher Leistung - in entsprechende Beugungsordnungen $B_{k,x,1}$, $B_{k,x,2}$, ... gebeugt werden.

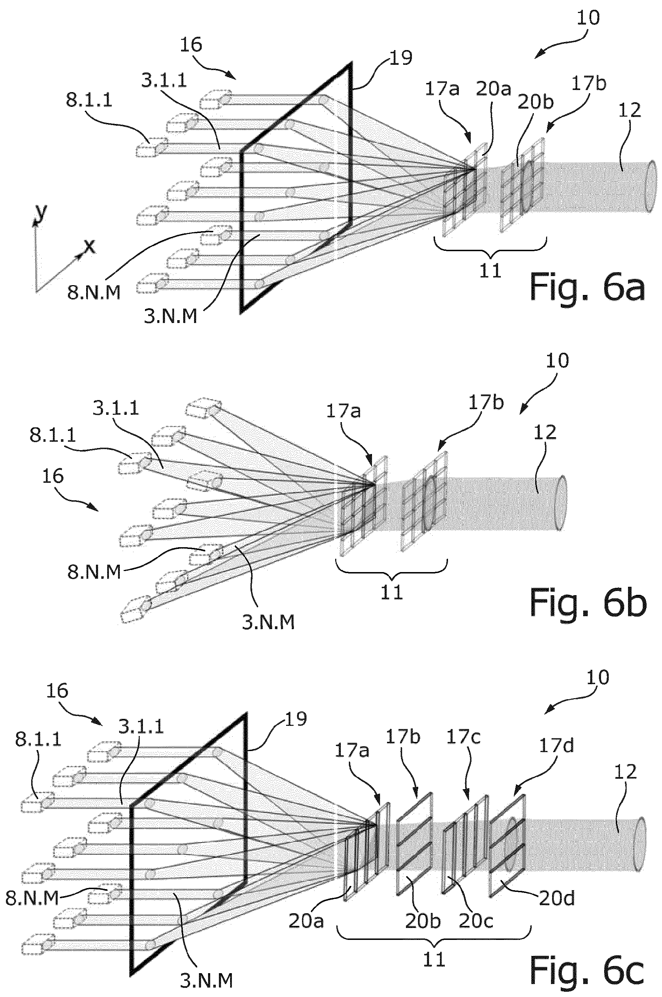

Bei dem in Zusammenhang mit Fig. 1a-c bis Fig. 5a,b beschriebenen Lasersystem 1 wurden die Laserstrahlen 3.1, ..., 3.N eindimensional kombiniert. **Fig. 6a-c** zeigen jeweils eine optische Anordnung, bei der eine Anzahl N (hier: N = 3) x M (hier: M = 3) von Raster-Positionen 8.1.1, ..., 8.N.M in einer zweidimensionalen Rasteranordnung 16 angeordnet ist. Bei dem in Fig. 6a gezeigten Beispiel sind die Raster-Positionen 8.1.1, ... 8.N.M in einer rechteckigen Rasteranordnung 16 in einer gemeinsamen Ebene (XY-Ebene) angeordnet und die Strahlausbreitungsrichtungen aller Laserstrahlen 3.1.1, ..., 3.N.M verlaufen parallel (in Z-Richtung). Analog zu Fig. 2 weist die Einkoppeloptik 18 bei der optischen Anordnung von Fig. 6a lediglich eine Fokussiereinrichtung in Form einer Fokussierlinse 19 auf, die in Fig. 6a als Quadrat dargestellt ist. Die Mikrolinsen 20a,b der Mikrolinsen-Arrays 17a,b der Mikrolinsenanordnung 11 sind jeweils in einem entsprechenden, rechteckigen Rasteranordnung angeordnet und parallel zur XY-Ebene ausgerichtet.

Bei der in Fig. 6b gezeigten optischen Anordnung sind die Raster-Positionen 8.1.1, ..., 8.N.M ebenfalls in einer Rasteranordnung 16 bzw. in einem Array angeordnet, das aber entlang einer gekrümmten Fläche, genauer gesagt entlang einer Kugelschale, verläuft, wobei die Strahlausbreitungsrichtungen der Laserstahlen 3.1.1, ..., 3.N.M senkrecht zur Kugelschale ausgerichtet sind und die Mikrolinsenanordnung 11 in der Nähe des Mittelpunkts der Kugelschale angeordnet ist. Auch eine Anordnung der Raster-Positionen 8.1.1, ..., 8.N.M in einer Rasteranordnung 16, welche entlang einer anderen gekrümmten Fläche, beispielsweise entlang eines Ellipsoids, verläuft, ist möglich. In diesem Fall kann auf eine Einkoppeloptik 18 verzichtet werden.

Fig. 6c zeigt eine optische Anordnung analog zu Fig. 6a, bei der die beiden zweidimensionalen Mikrolinsen-Arrays 17a,b der Mikrolinsenanordnung 11 durch vier eindimensionale Mikrolinsen-Arrays 17a-d ersetzt sind. Die Mikrolinsen-Arrays 17a-d weisen jeweils eine Mehrzahl von Mikrolinsen 20a-d in Form von Zylinderlinsen auf, wobei die Mikrolinsen 20a,c des ersten und dritten Mikrolinsen-Arrays 17a,c und die Mikrolinsen 20b,d des zweiten und vierten Mikrolinsen-Arrays 17b,d senkrecht zueinander, und zwar in X-Richtung bzw. in Y-Richtung, ausgerichtet sind.

In Abhängigkeit von den Abständen der Raster-Positionen 8.1.1, ... 8.N.M bzw. von der Periodizität der Rasteranordnung 16 in X-Richtung bzw. in Y-Richtung können sich auch die Rasterabstände $p_x$, $p_Y$ der Mikrolinsen 20a,b in den beiden zueinander senkrechten Richtungen X, Y voneinander unterscheiden. Die Mikrolinsen 20a,b weisen entsprechend eine ggf. unterschiedliche Krümmung in X-Richtung und in Y-Richtung auf, d.h. es handelt sich nicht um Zylinderlinsen. Die Kombination der kohärenten Laserstrahlen 3.1.1, ... 3.N.M in den beiden linear unabhängigen, im gezeigten Beispiel senkrechten Richtungen X, Y ist grundsätzlich unabhängig, d.h. die weiter oben angegebenen Bedingungen bzw. Gleichungen gelten für beide Richtungen X, Y unabhängig voneinander.

Lediglich bei der Einstellung der Phase der Laserstrahlen 3.1.1, ... 3.N.M addieren sich die Beiträge in den beiden zueinander senkrechten Richtungen, d.h. es gilt für eine Anzahl von N x M Laserstrahlen 3.1.1, ... 3.N.M, die in einer rechteckigen Rasteranordnung 16 (in X-Richtung bzw. Y-Richtung) angeordnet sind, für die jeweilige zusätzliche Phase:

$$\Delta\varphi_{a,b} = - ((2 \pi / N) (a - (N+1) / 2) B_{k,x} + (2 \pi / M) (b - (M+1) / 2) B_{k,y}) \qquad (3)$$

wobei M eine Anzahl der Raster-Positionen 8.1.1, ..., 8.N.M in Y-Richtung und $B_{k,y}$ eine ganzzahlige positive oder negative Zahl bezeichnen. Entsprechend addieren sich auch die Beiträge der Grund-Phasen $\delta\varphi_{a,b}$ in den beiden zueinander senkrechten Richtungen X, Y.

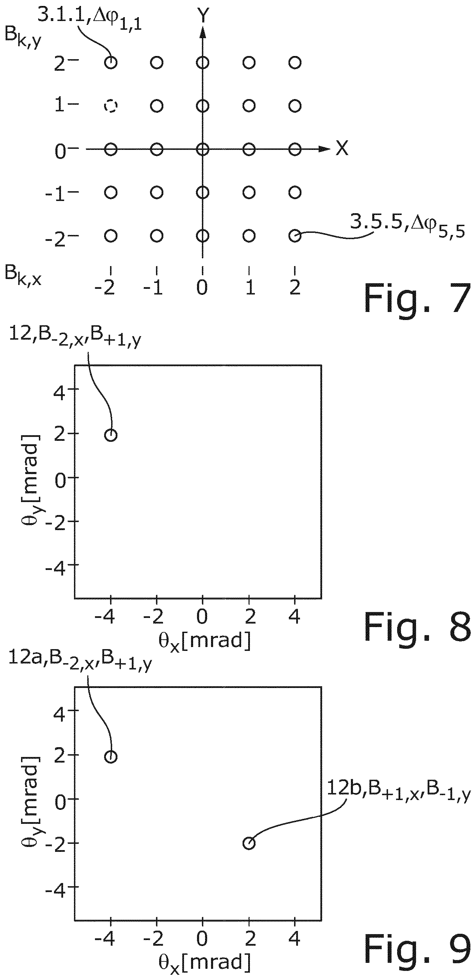

Fig. 7 zeigt analog zu Fig. 3a,b eine zweidimensionale Anordnung von N = 5 x M = 5 kohärenten Laserstrahlen 3.1.1, ..., 3.5.5 mit einer jeweils zugeordneten zusätzlichen Phase $\Delta\varphi_{a,b}$ (a = 1, ..., N; b = 1, ..., M) zur Erzeugung eines einzigen in eine Beugungsordnung $B_{-2,x}$ in X-Richtung und in eine Beugungsordnung $B_{+1,Y}$ in Y-Richtung gebeugten Laserstrahls 12 (vgl. Fig. 8) bzw. eines ersten, in eine erste Beugungsordnung $B_{-2,x,1}$ (in X-Richtung), $B_{+1,y,1}$ (in Y-Richtung) gebeugten Laserstrahls 12a sowie eines zweiten, in eine zweite Beugungsordnung $B_{+1,x,2}$ (in X-Richtung), $B_{-1,y,2}$ (in Y-Richtung) gebeugten Laserstrahls 12b (Fig. 9).

Um einen einzigen in eine (zweidimensionale) Beugungsordnung $B_{k,x}$, $B_{k,y}$ gebeugten Laserstrahl 12 zu erzeugen, wird für eine (a,b)-te Raster-Position 8.a.b in der zweidimensionalen Rasteranordnung 16 (vgl. Fig. 6a), d.h. eine a-te Raster-Position in X-Richtung, die gleichzeitig eine b-te Raster-Position in Y-Richtung bildet, bzw. einen (a, b)-ten kohärenten Laserstrahl 3.a.b (vgl. Fig. 7) eine zusätzliche Phase $\Delta\varphi_{a,b}$ eingestellt, die gegeben ist durch obige Gleichung (3).

Entsprechend werden auch bei dem in Fig. 9 dargestellten Fernfeld die jeweiligen zusätzlichen Phasen $\Delta\varphi_{a,b}$ mit Hilfe eines iterativen, stochastischen Optimierungsalgorithmus eingestellt, um den ersten, in eine erste Beugungsordnung $B_{-2,x,1}$ (X-Richtung), $B_{+1,y,1}$ (Y-Richtung) gebeugten Laserstrahl 12a sowie den zweiten, in die zweite Beugungsordnung $B_{+1,x,2}$ (X-Richtung), $B_{-1,y,2}$ (Y-Richtung) gebeugten Laserstrahl 12b zu erzeugen.

Wie weiter oben beschrieben wurde, ist die Anzahl und die Anordnung der Beugungsordnungen $B_{k,x,1}$, $B_{k,y,1}$, $B_{k,x,2}$, $B_{k,y,2}$, ... gebeugten Laserstrahlen 12a, 12b, ... grundsätzlich beliebig und wird nur durch die Anzahl N bzw. M der für die Kombination verwendeten kohärenten Laserstrahlen 3.a.b begrenzt. Durch eine geeignete Wahl bzw. Variation der zusätzlichen Phasen $\Delta\varphi_a$ in einer eindimensionalen Rasteranordnung 16 bzw. der zusätzlichen Phasen $\Delta\varphi_{a,b}$ in einer zweidimensionalen Rasteranordnung 16 können gezielt einzelne kombinierte Laserstrahlen, Gruppen von kombinierten Laserstrahlen oder ein gesamtes Array von kombinierten Laserstrahlen, das einem Satz von Beugungsordnungen entspricht, an- oder abgeschaltet werden.

Mit dem oben beschriebenen Lasersystem 1 kann daher ein (diskreter) ein- oder zweidimensionaler Scanvorgang bzw. eine gezielte Strahlablenkung und/oder eine gezielte Aufteilung des kombinierten Laserstrahls 12 auf zwei oder mehr Laserstrahlen 12a, 12b erreicht werden. Der bzw. die kombinierten Laserstrahlen 12, 12a,b können mit Hilfe einer nicht bildlich dargestellten Optik, z.B. einer Linse, auf (variierende) Fokusposition(en) in einer Fokusebene abgebildet bzw. fokussiert werden.

## Patentansprüche

1. Lasersystem (1), umfassend:
   eine Seed-Laserquelle (2) zur Erzeugung eines Seed-Laserstrahls (2a), sowie eine Vorrichtung (5) zur Kombination einer Mehrzahl von kohärenten Laserstrahlen (3.1, ..., 3.N; 3.1.1, ..., 3.N.M), umfassend:

   eine Aufteilungseinrichtung (4) zur Aufteilung eines Eingangs-Laserstrahls (9) auf die Mehrzahl von kohärenten Laserstrahlen (3.1, ..., 3.N; 3.1.1, ..., 3.N.M),
   eine Mehrzahl von Phasen-Einstelleinrichtungen (6.1, ..., 6.N) zur Einstellung einer jeweiligen Phase ($\delta\varphi_a + \Delta\varphi_a$; $\delta\varphi_{a,b} + \Delta\varphi_{a,b}$) eines der kohärenten Laserstrahlen (3.1, ..., 3.N; 3.1.1, ..., 3.N.M), sowie
   eine Strahlkombinationseinrichtung (10) zur Kombination der kohärenten Laserstrahlen (3.1, ..., 3.N; 3.1.1, ..., 3.N.M), die von einer Mehrzahl von Raster-Positionen (8.1, ..., 8.N; 8.1.1, ..., 8.N.M) einer Rasteranordnung (16) ausgehen,

wobei die Strahlkombinationseinrichtung (10) eine Mikrolinsenanordnung (11) mit mindestens zwei Mikrolinsen-Arrays (17a,b) aufweist,

**gekennzeichnet durch**

eine Steuerungseinrichtung (15), die zur Einstellung einer jeweiligen Phase ($\delta\varphi_a + \Delta\varphi_a$; $\delta\varphi_{a,b} + \Delta\varphi_{a,b}$) eines der kohärenten Laserstrahlen (3.1, ..., 3.N; 3.1.1, ..., 3.N.M) in Abhängigkeit von einer Anordnung der jeweiligen Raster-Position (8.1, ..., 8.N; 8.1.1, ..., 8.N.M) innerhalb der Rasteranordnung (16) ausgebildet ist, um die kohärenten Laserstrahlen (3.1, ..., 3.N; 3.1.1, ..., 3.N.M) zu mindestens einem in eine von der nullten Beugungsordnung ($B_0$) verschiedene Beugungsordnung ($B_{k,x}$, $B_{k,y}$; $B_{k,x,1}$, $B_{k,y,1}$, $B_{k,x,2}$, $B_{k,y,2}$) gebeugten Laserstrahl (12, 12a,b) zu kombinieren und

die zur Variation der jeweiligen Phase ($\delta\varphi_a + \Delta\varphi_a$; $\delta\varphi_{a,b} + \Delta\varphi_{a,b}$) eines der kohärenten Laserstrahlen (3.1, ..., 3.N; 3.1.1, ..., 3.N.M) in Abhängigkeit von einer Anordnung der jeweiligen Raster-Position (8.1, ..., 8.N; 8.1.1, ..., 8.N.M) innerhalb der Rasteranordnung (16) ausgebildet ist, um eine Beugungsordnung ($B_{k,x}$ $B_{k,y}$) zu verändern, in die der mindestens eine kombinierte Laserstrahl (12, 12a,b) gebeugt wird, wobei

die Raster-Positionen (8.1, ..., 8.N) in der Rasteranordnung (16) entlang einer ersten Richtung (X) angeordnet sind und wobei die kohärenten Laserstrahlen (3.1, ..., 3.N) und die Mikrolinsenanordnung (11) folgende Bedingung erfüllen:

$$N = p_x^2 / (\lambda_L\, f_E),$$

wobei N eine Anzahl der entlang der ersten Richtung (X) angeordneten Raster-Positionen (8.1, ..., 8.N), $p_x$ einen Rasterabstand der Mikrolinsen (20a,b; 20a-c) eines jeweiligen Mikrolinsen-Arrays (17a,b; 17a-c) in der ersten Richtung (X), $\lambda_L$ die Laserwellenlänge und $f_E$ die Brennweite der Mikrolinsenanordnung (11) bezeichnen, wobei entweder

der Seed-Laserstrahl (2a) der Seed-Laserquelle (2) den Eingangs-Laserstrahl (9) der Aufteilungseinrichtung (4) der Vorrichtung (5) bildet,

oder

das Lasersystem (1) mindestens einen optischen Verstärker (7) zur Verstärkung des Seed-Laserstrahls (2a) vor dem Eintritt in die Vorrichtung (5) aufweist, wobei der verstärkte Seed-Laserstrahl den Eingangs-Laserstrahl (9) der Aufteilungseinrichtung (4) der Vorrichtung (5) bildet,

oder

das Lasersystem (1) eine weitere Vorrichtung (5') zur Kombination einer Mehrzahl von weiteren kohärenten Laserstrahlen (3.1', ..., 3.N') aufweist, umfassend:

eine weitere Aufteilungseinrichtung (4') zur Aufteilung des Seed-Laserstrahls (2a) auf die Mehrzahl von weiteren kohärenten Laserstrahlen (3.1', ..., 3.N'),

eine Mehrzahl von weiteren Phasen-Einstelleinrichtungen (6.1', ..., 6.N') zur Einstellung einer jeweiligen Phase ($\delta\varphi_a$) eines der weiteren kohärenten Laserstrahlen (3.1', ..., 3.N'), sowie

eine weitere Strahlkombinationseinrichtung (10') zur Kombination der weiteren kohärenten Laserstrahlen (3.1', ..., 3.N') ausgehend von einer Mehrzahl von weiteren Raster-Positionen (8.1', ..., 8.N') einer weiteren Rasteranordnung (16'),

wobei die weitere Strahlkombinationseinrichtung (10') eine weitere Mikrolinsenanordnung (11') mit mindestens zwei weiteren Mikrolinsen-Arrays (17a', 17b') aufweist, sowie eine weitere Steuerungseinrichtung (15'), die zur Einstellung der jeweiligen Phase ($\delta\varphi_a$) eines der weiteren kohärenten Laserstrahlen (3.1', ..., 3.N') in Abhängigkeit von einer Anordnung der jeweiligen weiteren Raster-Position (8.1', ..., 8.N') innerhalb der weiteren Rasteranordnung (16') ausgebildet ist, um die kohärenten weiteren Laserstrahlen (3.1', ..., 3.N') zu einem in die nullte Beugungsordnung ($B_0$) oder in eine von der nullten Beugungsordnung ($B_0$) verschiedene Beugungsordnung ($B_{k,x}$, $B_{k,y}$) gebeugten Laserstrahl (12') zu kombinieren, welcher den Eingangs-Laserstrahl (9) der Aufteilungseinrichtung (4) der Vorrichtung (5) bildet.

2. Lasersystem nach Anspruch 1, bei welcher die Steuerungseinrichtung (15) zur Einstellung der jeweiligen Phase ($\delta\varphi_a + \Delta\varphi_a$; $\delta\varphi_{a,b} + \Delta\varphi_{a,b}$) eines der kohärenten Laserstrahlen (3.1, ..., 3.N; 3.1.1, ..., 3.N.M) ausgebildet ist, die sich aus einer jeweiligen Grund-Phase ($\delta\varphi_a$; $\delta\varphi_{a,b}$), bei der die Strahlkombinationseinrichtung (10) die kohärenten Laserstrahlen (3.1, ..., 3.N; 3.1.1, ..., 3.N.M) zu einem einzigen in die nullte Beugungsordnung ($B_0$) oder in eine von der nullten Beugungsordnung ($B_0$) verschiedene Beugungsordnung ($B_{k,x}$, $B_{k,y}$) gebeugten Laserstrahl (12) kombiniert, sowie aus einer zusätzlichen Phase ($\Delta\varphi_a$; $\Delta\varphi_{a,b}$) zusammensetzt.

3. Lasersystem nach Anspruch 2, bei der die Raster-Positionen (8.1, ..., 8.N) entlang einer ersten Richtung (X) angeordnet sind und bei der die Steuerungseinrichtung (15) ausgebildet ist, zur Kombination der kohärenten Laserstrahlen (3.1, ..., 3.N) zu einem einzigen, in eine von der nullten Beugungsordnung ($B_0$) verschiedene Beugungsordnung $B_{k,x}$ in der ersten Richtung (X) gebeugten kombinierten Laserstrahls (12) die jeweilige zusätzliche Phase $\Delta\varphi_a$ eines kohärenten Laserstrahls (3.1, ..., 3.N) an einer a-ten Raster-Position (8.1, ..., 8.N) in der ersten Richtung (X) einzustellen, die gegeben ist durch:

$$\Delta\varphi_a = - (2\pi / N)(a - (N+1) / 2) B_{k,x},$$

wobei N eine Anzahl der entlang der ersten Richtung (X) angeordneten Raster-Positionen (8.1, ..., 8.N) und $B_{k,x}$ eine ganzzahlige positive oder negative Zahl bezeichnen.

4. Lasersystem nach Anspruch 3, bei der die Raster-Positionen (8.1.1, ..., 8.N.M) in der Rasteranordnung (16) zusätzlich entlang einer zweiten, bevorzugt zur ersten senkrechten Richtung (Y) angeordnet sind und bei der die Steuerungseinrichtung (15) ausgebildet ist, zur Kombination der kohärenten Laserstrahlen (3.1.1, ..., 3.N.M) zu einem einzigen, in die von der nullten Beugungsordnung ($B_0$) verschiedene Beugungsordnung $B_{k,x}$ in der ersten Richtung (X) und in eine von der nullten Beugungsordnung ($B_0$) verschiedene Beugungsordnung $B_{k,y}$ in der zweiten Richtung (Y) gebeugten kombinierten Laserstrahl (12) eine zusätzliche Phase $\Delta\varphi_{a,b}$ eines kohärenten Laserstrahls (3.1, ..., 3.N) an einer a-ten Raster-Position (8.1.1, ..., 8.N.M) entlang der ersten Richtung (X) und einer b-ten Raster-Position (8.1.1, ..., 8.N.M) entlang der zweiten Richtung (Y) einzustellen, die gegeben ist durch:

$$\Delta\varphi_{a,b} = - ((2\pi / N)(a - (N+1) / 2) B_{k,x} + (2\pi / M)(b - (M+1) / 2) B_{k,y})$$

wobei M eine Anzahl der Raster-Positionen (8.1.1, ..., 8.N.M) in der zweiten Richtung (Y) und $B_{k,y}$ eine ganzzahlige positive oder negative Zahl bezeichnen.

5. Lasersystem nach Anspruch 3 oder 4, bei welcher die Aufteilungseinrichtung (4) zur Aufteilung eines Eingangs-Laserstrahls (9) auf die Mehrzahl von kohärenten Laserstrahlen (3.1, ..., 3.N; 3.1.1, ..., 3.N.M) als weitere Mikrolinsenanordnung bevorzugt mit zwei weiteren Mikrolinsen-Arrays (17'a, 17'b) ausgebildet ist, und wobei die Steuerungseinrichtung (15) ausgebildet ist, zur Kombination der kohärenten Laserstrahlen (3.1, ..., 3.N) zu einem einzigen, in eine von der nullten Beugungsordnung ($B_0$) verschiedene Beugungsordnung $B_{k,x}$ in der ersten Richtung (X) und bevorzugt in eine von der nullten Beugungsordnung ($B_0$) verschiedene Beugungsordnung $B_{k,y}$ in der zweiten Richtung (Y) gebeugten kombinierten Laserstrahl (12) das Doppelte der Grund-Phasen ($\delta\varphi_a$; $\delta\varphi_{a,b}$) einzustellen.

6. Lasersystem nach Anspruch 2, bei der die Steuerungseinrichtung (15) ausgebildet ist, die jeweilige zusätzliche Phase ($\Delta\varphi_a$; $\Delta\varphi_{a,b}$) der kohärenten Laserstrahlen (3.1, ..., 3.N; 3.1.1, ..., 3.N.M) zur Veränderung einer ersten Beugungsordnung ($B_{k,x,1}$, $B_{k,y,1}$), in die ein erster kombinierter Laserstrahl (12a) gebeugt wird, und/oder zur Veränderung einer zweiten Beugungsordnung ($B_{k,x,2}$, $B_{k,y,2}$), in die ein zweiter kombinierter Laserstrahl (12b) gebeugt wird, zu variieren.

7. Lasersystem nach Anspruch 2 oder 6, bei welcher die Steuerungseinrichtung (15) zur Einstellung einer jeweiligen zusätzlichen Phase ($\Delta\varphi_a$) der kohärenten Laserstrahlen (3.1, ..., 3.N; 3.1.1, ..., 3.N.M) zur Erzeugung einer vorge-gebenen, insbesondere unterschiedlichen Leistung ($p_0$, $p_{-1}$, ...) von mindestens zwei in verschiedene Beugungs-ordnungen ($B_0$, $B_{-1,x}$, ...) gebeugten kombinierten Laserstrahlen (12a,b) ausgebildet ist.

8. Lasersystem nach einem der vorhergehenden Ansprüche, welche ausgebildet ist, in der ersten Richtung (X) benachbarte kohärente Laserstrahlen (3.1, 3.2; 3.2, 3.3) mit einer vorgegebenen Winkeldifferenz $\delta\theta_x$ in die Mikro-linsenanordnung (11) einzukoppeln, für die gilt:

$$\delta\theta_x = \lambda_L / p_x,$$

wobei $\lambda_L$ die Laserwellenlänge und $p_x$ einen Rasterabstand der Mikrolinsen (20a,b; 20a-c) eines jeweiligen Mikrolinsen-Arrays (17a,b; 17a-c) in der ersten Richtung (X) bezeichnen.

9. Lasersystem nach einem der vorhergehenden Ansprüche, weiter umfassend: eine Einkoppeloptik (18) zur Einkopplung der kohärenten Laserstrahlen (3.1, ..., 3.N; 3.1.1, ... 3.N.M) in die Mikrolinsenanordnung (11), wobei die Einkoppeloptik (18) mindestens eine Fokussiereinrichtung, insbesondere mindestens eine Fokussierlinse (19), zur Fokussierung der Mehrzahl von kohärenten Laserstrahlen auf die Mikrolinsenanordnung (11) aufweist.

10. Lasersystem nach Anspruch 9, bei welcher in der ersten Richtung (X) benachbarte Raster-Positionen (8.1, ..., 8.N; 8.1.1, ..., 8.N.M) entlang einer Linie angeordnet sind und einen Abstand $\delta x$ voneinander aufweisen, der gegeben ist durch

$$\delta x = \lambda_L \, f_2 \, / \, p_x,$$

wobei $\lambda_L$ die Laserwellenlänge, $f_2$ die Brennweite der Fokussiereinrichtung (19) und p einen Rasterabstand der Mikrolinsen (20a,b; 20a-c) eines jeweiligen Mikrolinsen-Arrays (17a,b; 17a-c) in der ersten Richtung (X) bezeichnen.

11. Verfahren zum Kombinieren einer Mehrzahl von kohärenten Laserstrahlen (3.1, ..., 3.N; 3.1.1, ..., 3.N.M), insbesondere mittels einer Vorrichtung (5) eines Lasersystems (1) nach einem der Ansprüche 1 bis 10, umfassend:

Einkoppeln der Mehrzahl von kohärenten Laserstrahlen (3.1, ..., 3.N; 3.1.1, ..., 3.N.M), die von einer Mehrzahl von in einer Rasteranordnung (16) angeordneten Raster-Positionen (8.1, ..., 8.N; 8.1.1, ..., 8.N.M) ausgehen, in eine Mikrolinsenanordnung (11), die mindestens zwei Mikrolinsen-Arrays (17a,b; 17a-c) aufweist, sowie Kombinieren der kohärenten Laserstrahlen (3.1, ..., 3.N; 3.1.1, ..., 3.N.M) in der Mikrolinsenanordnung (11),
**gekennzeichnet durch**
Einstellen einer jeweiligen Phase ($\delta\varphi_a + \Delta\varphi_a$; $\delta\varphi_{a,b} + \Delta\varphi_{a,b}$) eines der kohärenten Laserstrahlen (3.1, ..., 3.N; 3.1.1, ..., 3.N.M) in Abhängigkeit von einer Anordnung der jeweiligen Raster-Position (8.1, ..., 8.N; 8.1.1, ..., 8.N.M) innerhalb der Rasteranordnung (16) zum Kombinieren der kohärenten Laserstrahlen (3.1, ..., 3.N; 3.1.1, ..., 3.N.M) zu mindestens einem in eine von der nullten Beugungsordnung ($B_0$) verschiedene Beugungsordnung ($B_{k,x}$, $B_{k,y}$; $B_{k,x,1}$, $B_{k,y,1}$, $B_{k,x,2}$, $B_{k,y,2}$) gebeugten Laserstrahl (12, 12a,b) und Variieren der jeweiligen Phase ($\delta\varphi_a + \Delta\varphi_a$; $\delta\varphi_{a,b} + \Delta\varphi_{a,b}$) der kohärenten Laserstrahlen (3.1, ..., 3.N; 3.1.1, ..., 3.N.M) in Abhängigkeit von einer Anordnung der jeweiligen Raster-Position (8.1, ..., 8.N; 8.1.1, ..., 8.N.M) innerhalb der Rasteranordnung (16), um eine Beugungsordnung ($B_{k,x}$ $B_{k,y}$) zu verändern, in die der mindestens eine kombinierte Laserstrahl (12, 12a,b) gebeugt wird, wobei die Raster-Positionen (8.1, ..., 8.N) in der Rasteranordnung (16) entlang einer ersten Richtung (X) angeordnet sind und wobei die kohärenten Laserstrahlen (3.1, ..., 3.N) und die Mikrolinsenanordnung (11) folgende Bedingung erfüllen:

$$N = p_x^2 \, / \, (\lambda_L \, f_E),$$

wobei N eine Anzahl der entlang der ersten Richtung (X) angeordneten Raster-Positionen (8.1, ..., 8.N), $p_x$ einen Rasterabstand der Mikrolinsen (20a,b; 20a-c) eines jeweiligen Mikrolinsen-Arrays (17a,b; 17a-c) in der ersten Richtung (X), $\lambda_L$ die Laserwellenlänge und $f_E$ die Brennweite der Mikrolinsenanordnung (11) bezeichnen.

12. Verfahren nach Anspruch 11, weiter umfassend:
Variieren einer jeweiligen zusätzlichen Phase ($\Delta\varphi_{a,b}$; $\Delta\varphi_{a,b}$) der kohärenten Laserstrahlen (3.1, ..., 3.N; 3.1.1, ..., 3.N.M) zur Veränderung einer ersten Beugungsordnung ($B_{k,x,1}$, $B_{k,y,2}$), in die ein erster kombinierter Laserstrahl (12a) gebeugt wird, und/oder zur Veränderung einer zweiten Beugungsordnung ($B_{k,x,2}$, $B_{k,y,2}$), in die ein zweiter kombinierter Laserstrahl (12b) gebeugt wird, ausgehend von einer jeweiligen Grund-Phase ($\delta\varphi_a$; $\delta\varphi_{a,b}$), bei der die Strahlkombinationseinrichtung (10) die kohärenten Laserstrahlen (3.1, ..., 3.N; 3.1.1, ..., 3.N.M) zu einem einzigen in die nullte Beugungsordnung ($B_0$) oder in eine von der nullten Beugungsordnung ($B_0$) verschiedene Beugungsordnung ($B_{k,x}$, $B_{k,y}$) gebeugten Laserstrahl (12) kombiniert.

13. Verfahren nach Anspruch 11 oder 12, weiter umfassend: Einstellen einer jeweiligen zusätzlichen Phase ($\Delta\varphi_a$) der kohärenten Laserstrahlen (3.1, ..., 3.N; 3.1.1, ..., 3.N.M) zur Erzeugung einer vorgegebenen, insbesondere unterschiedlichen Leistung ($p_0$, $p_{-1}$, ...) von in mindestens zwei in verschiedene Beugungsordnungen ($B_0$, $B_{-1,x}$, ...) gebeugten kombinierten Laserstrahlen (12a,b) ausgehend von einer jeweiligen Grund-Phase ($\delta\varphi_a$; $\delta\varphi_{a,b}$), bei der die Strahlkombinationseinrichtung (10) die kohärenten Laserstrahlen (3.1, ..., 3.N; 3.1.1, ..., 3.N.M) zu einem einzigen in die nullte Beugungsordnung ($B_0$) oder in eine von der nullten Beugungsordnung ($B_0$) verschiedene Beugungsordnung ($B_{k,x}$, $B_{k,y}$) gebeugten Laserstrahl (12) kombiniert.

**Claims**

1. A laser system (1), comprising:
a seed laser source (2) for producing a seed laser beam (2a), and an apparatus (5) for combining a plurality of coherent laser beams (3.1, ..., 3.N; 3.1.1, ..., 3.N.M), comprising:

a splitting device (4) for splitting an input laser beam (9) into the plurality of coherent laser beams (3.1, ..., 3.N; 3.1.1, ..., 3.N.M), a plurality of phase setting devices (6.1, ..., 6.N) for adjusting a respective phase ($\delta\varphi_a + \Delta\varphi_a$; $\delta\varphi_{a,b} + \Delta\varphi_{a,b}$) of one of the coherent laser beams (3.1, ..., 3.N; 3.1.1, ..., 3.N.M), as well as a beam combining device (10) for combining the coherent laser beams (3.1, ..., 3.N; 3.1.1, ..., 3.N.M) which emanate from a plurality of grid positions (8.1, ..., 8.N; 8.1.1, ..., 8.N.M) of a grid arrangement (16), wherein the beam combining device (10) has a microlens arrangement (11) with at least two microlens arrays (17a,b), **characterized by** a controller (15) designed to adjust a respective phase ($\delta\varphi_a + \Delta\varphi_a$; $\delta\varphi_{a,b} + \Delta\varphi_{a,b}$) of one of the coherent laser beams (3.1, ..., 3.N; 3.1.1, ..., 3.N.M) depending on an arrangement of the respective grid position (8.1, ..., 8.N; 8.1.1, ..., 8.N.M) within the grid arrangement (16) in order to combine the coherent laser beams (3.1, ..., 3.N; 3.1.1, ..., 3.N.M) into at least one laser beam (12, 12a,b) that is diffracted into an order of diffraction ($B_{k,x}$, $B_{k,y}$; $B_{k,x,1}$, $B_{k,y,1}$, $B_{k,x,2}$, $B_{k,y,2}$) that differs from the zeroth order of diffraction ($B_0$), and designed to vary the respective phase ($\delta\varphi_a + \Delta\varphi_a$; $\delta\varphi_{a,b} + \Delta\varphi_{a,b}$) of one of the coherent laser beams (3.1, ..., 3.N; 3.1.1, ..., 3.N.M) based on an arrangement of the respective grid position (8.1, ..., 8.N; 8.1.1, ..., 8.N.M) within the grid arrangement (16) in order to change an order of diffraction ($B_{k,x}$ $B_{k,y}$) into which at least one combined laser beam (12, 12a,b) is diffracted, wherein the grid positions (8.1, ..., 8.N) are arranged in the grid arrangement (16) along a first direction (X) and wherein the coherent laser beams (3.1, ..., 3.N) and the microlens arrangement (11) meet the following condition:

$$N = p_x^2 / (\lambda_L\ f_E),$$

wherein N denotes a number of the grid positions (8.1, ..., 8.N) arranged along the first direction (X), $p_x$ denotes a pitch of the microlenses (20a,b; 20a-c) of a respective microlens array (17a,b; 17a-c) in the first direction (X), $\lambda_L$ denotes the laser wavelength and $f_E$ denotes the focal length of the microlens arrangement (11), wherein either the seed laser beam (2a) of the seed laser source (2) forms the input laser beam (9) of the splitting device (4) of the apparatus (5), or the laser system (1) has at least one optical amplifier (7) for amplifying the seed laser beam (2a) prior to its entry into the apparatus (5), wherein the amplified seed laser beam forms the input laser beam (9) of the splitting device (4) of the apparatus (5), or the laser system (1) has a further apparatus (5') for combining a plurality of further coherent laser beams (3.1', ..., 3.N'), the apparatus comprising:

a further splitting device (4') for splitting the seed laser beam (2a) into the plurality of further coherent laser beams (3.1', ..., 3.N'), a plurality of further phase setting devices (6.1', ..., 6.N') for adjusting a respective phase ($\delta\varphi_a$) of one of the further coherent laser beams (3.1', ..., 3.N'), as well as a further beam combining device (10') for combining the further coherent laser beams (3.1', ..., 3.N') emanating from a plurality of further grid positions (8.1', ..., 8.N') of a further grid arrangement (16'), wherein the further beam combining device (10') has a further microlens arrangement (11') with at least two further microlens arrays (17a', 17b'), as well as a further controller (15') designed to adjust the respective phase ($\delta\varphi_a$) of one of the further coherent laser beams (3.1', ..., 3.N') on the basis of an arrangement of the respective further grid position (8.1', ..., 8.N') within the further grid arrangement (16') in order to combine the coherent further laser beams (3.1', ..., 3.N') into a laser beam (12') that is diffracted into the zeroth order of diffraction ($B_0$) or into an order of diffraction ($B_{k,x}$, $B_{k,y}$) that differs from the zeroth order of diffraction ($B_0$), the diffracted laser beam forming the input laser beam (9) of the splitting device (4) of the apparatus (5).

2. The laser system according to claim 1, in which the controller (15) is designed to adjust the respective phase ($\delta\varphi_a + \Delta\varphi_a$; $\delta\varphi_{a,b} + \Delta\varphi_{a,b}$) of one of the coherent laser beams (3.1, ..., 3.N; 3.1.1, ..., 3.N.M), the respective phase being composed of a respective fundamental phase ($\delta\varphi_a$; $\delta\varphi_{a,b}$) at which the beam combining device (10) combines the coherent laser beams (3.1, ..., 3.N; 3.1.1, ..., 3.N.M) into a single laser beam (12) that is diffracted into the zeroth order

of diffraction ($B_0$) or into an order of diffraction ($B_{k,x}$, $B_{k,y}$) that differs from the zeroth order of diffraction ($B_0$), as well as an additional phase ($\Delta\varphi_a$; $\Delta\varphi_{a,b}$).

3. The laser system according to claim 2, in which the grid positions (8.1, ..., 8.N) are arranged along a first direction (X) and in which the controller (15) is designed, for purposes of combining the coherent laser beams (3.1, ..., 3.N) into a single combined laser beam (12) that is diffracted into an order of diffraction $B_{k,x}$ in the first direction (X) that differs from the zeroth order of diffraction ($B_0$), setting the respective additional phase $\Delta\varphi_a$ of a coherent laser beam (3.1, ..., 3.N) at an a-th grid position (8.1, ..., 8.N) in the first direction (X), the grid position being given as:

$$\Delta\varphi_a = - (2\pi / N) (a - (N+1) / 2) B_{k,x},$$

wherein N denotes a number of the grid positions (8.1, ..., 8.N) arranged along the first direction (X) and $B_{k,x}$ denotes a positive or negative whole number.

4. The laser system according to claim 3, in which the grid positions (8.1.1, ..., 8.N.M) in the grid arrangement (16) are additionally arranged along a second direction (Y) that is preferably perpendicular to the first, and in which the controller (15) is designed to combine the coherent laser beams (3.1.1, ..., 3.N.M) into a single combined laser beam (12) that is diffracted into the order of diffraction $B_{k,x}$ in the first direction (X) that differs from the zeroth order of diffraction ($B_0$) and into an order of diffraction $B_{k,y}$ in the second direction (Y) that differs from the zeroth order of diffraction ($B_0$), to set an additional phase $\Delta\varphi_{a,b}$ of a coherent laser beam (3.1, ..., 3.N) at an a-th grid position (8.1.1, ..., 8.N.M) in the first direction (X) and at a b-th grid position (8.1.1, ..., 8.N.M) in the second direction (Y) which is given by:

$$\Delta\varphi_{a,b} = - ((2\pi / N) (a - (N+1) / 2) B_{k,x} + (2\pi / M) (b - (M+1) / 2) B_{k,y})$$

wherein M denotes a number of the grid positions (8.1.1, ..., 8.N.M) in the second direction (Y) and $B_{k,y}$ denotes a positive or negative whole number.

5. The laser system according to claim 3 or 4, in which the splitting device (4) for splitting an input laser beam (9) into the plurality of coherent laser beams (3.1, ..., 3.N; 3.1.1, ..., 3.N.M) is designed as a further microlens arrangement, preferably comprising two further microlens arrays (17'a, 17'b), and wherein the controller (15) is designed, in order to combine the coherent laser beams (3.1, ..., 3.N) into a single combined laser beam (12) that is diffracted into an order of diffraction $B_{k,x}$ in the first direction (X) that differs from the zeroth order of diffraction ($B_0$) and that is diffracted into an order of diffraction $B_{k,y}$ in the second direction (Y) that differs from the zeroth order of diffraction ($B_0$), to set double the fundamental phases ($\delta\varphi_a$; $\delta\varphi_{a,b}$).

6. The laser system according to claim 2, in which the controller (15) is designed to vary the respective additional phase ($\Delta\varphi_a$; $\Delta\varphi_{a,b}$) of the coherent laser beams (3.1, ..., 3.N; 3.1.1, ..., 3.N.M) in order to change a first order of diffraction ($B_{k,x,1}$, $B_{k,y,1}$) into which a first combined laser beam (12a) is diffracted, and/or to change a second order of diffraction ($B_{k,x,2}$, $B_{k,y,2}$) into which a second combined laser beam (12b) is diffracted.

7. The laser system according to claim 2 or 6, in which the controller (15) is designed to adjust a respective additional phase ($\Delta\varphi_a$) of the coherent laser beams (3.1, ..., 3.N; 3.1.1, ..., 3.N.M) to produce a specified, in particular different, power ($p_0$, $p_{-1}$, ...) of at least two combined laser beams (12a,b) that are diffracted into different orders of diffraction ($B_0$, $B_{-1,x}$, ...).

8. The laser system according to any one of the preceding claims, designed to couple, in the first direction (X), adjacent coherent laser beams (3.1, 3.2; 3.2, 3.3) with a specified angular difference $\delta\theta_x$ into the microlens arrangement (11), for which the following applies:

$$\delta\theta_x = \lambda_L / p_x,$$

wherein $\lambda_L$ denotes the laser wavelength and $p_x$ denotes a pitch of the microlenses (20a,b; 20a-c) of a respective microlens array (17a,b; 17a-c) in the first direction (X).

9. The laser system according to any one of the preceding claims, further comprising: an in-coupling optic (18) for coupling the coherent laser beams (3.1, ..., 3.N; 3.1.1, ... 3.N.M) into the microlens arrangement (11), wherein the in-coupling optic (18) has at least one focusing device, in particular at least one focusing lens (19), for focusing the plurality of coherent laser beams onto the microlens arrangement (11).

10. The laser system according to claim 9 in which grid positions (8.1, ..., 8.N; 8.1.1, ..., 8.N.M) that are adjacent in the first direction (X) are arranged along a line and have a distance $\delta x$ from one another which is given by

$$\delta x = \lambda_L \, f_2 \, / \, p_x,$$

wherein $\lambda_L$ denotes the laser wavelength, $f_2$ denotes the focal length of the focusing device (19), and p denotes a pitch of the microlenses (20a,b; 20a-c) of a respective microlens array (17a,b; 17a-c) in the first direction (X).

11. A method for combining a plurality of coherent laser beams (3.1, ..., 3.N; 3.1.1, ..., 3.N.M), in particular by means of an apparatus (5) of a laser system (1) according to any one of claims 1 to 10, comprising:

in-coupling the plurality of coherent laser beams (3.1, ..., 3.N; 3.1.1, ..., 3.N.M) which emanate from a plurality of grid positions (8.1, ..., 8.N; 8.1.1, ..., 8.N.M) arranged in a grid arrangement (16), into a microlens arrangement (11) having at least two microlens arrays (17a,b; 17a-c), as well as combining the coherent laser beams (3.1, ..., 3.N; 3.1.1, ..., 3.N.M) in the microlens arrangement (11),

**characterized by**
adjusting a respective phase ($\delta\varphi_a + \Delta\varphi_a$; $\delta\varphi_{a,b} + \Delta\varphi_{a,b}$) of one of the coherent laser beams (3.1, ..., 3.N; 3.1.1, ..., 3.N.M) depending on an arrangement of the respective grid positions (8.1, ..., 8.N; 8.1.1, ..., 8.N.M) within the grid arrangement (16) for the purpose of combining the plurality of coherent laser beams (3.1, ..., 3.N; 3.1.1, ..., 3.N.M) into at least one combined laser beam (12, 12a,b) that is diffracted into an order of diffraction ($B_{k,x}$, $B_{k,y}$; $B_{k,x,1}$, $B_{k,y,1}$, $B_{k,x,2}$, $B_{k,y,2}$) that differs from the zeroth order
of diffraction ($B_0$), and/or varying the respective phase ($\delta\varphi_a + \Delta\varphi_a$; $\delta\varphi_{a,b} + \Delta\varphi_{a,b}$) of the coherent laser beams (3.1, ..., 3.N; 3.1.1, ..., 3.N.M) depending on an arrangement of the respective grid positions (8.1, ..., 8.N; 8.1.1, ..., 8.N.M) within the grid arrangement (16) in order to change an order of diffraction ($B_{k,x}$ $B_{k,y}$) into which the at least one combined laser beam (12, 12a,b) is diffracted, wherein
the grid positions (8.1, ..., 8.N) are arranged in the grid arrangement (16) along a first direction (X) and wherein the coherent laser beams (3.1, ..., 3.N) and the microlens arrangement (11) meet the following condition:

$$N = p_x^2 \, / \, (\lambda_L \, f_E),$$

wherein N denotes a number of the grid positions (8.1, ..., 8.N) arranged along the first direction (X), $p_x$ denotes a pitch of the microlenses (20a,b; 20a-c) of a respective microlens array (17a,b; 17a-c) in the first direction (X), $\lambda_L$ denotes the laser wavelength and $f_E$ denotes the focal length of the microlens arrangement (11).

12. The method according to claim 11, further comprising: varying a respective additional phase ($\Delta\varphi_{a,b}$; $\Delta\varphi_{a,b}$) of the coherent laser beams (3.1, ..., 3.N; 3.1.1, ..., 3.N.M) for the purpose of changing a first order of diffraction ($B_{k,x,1}$, $B_{k,y,2}$) into which a first combined laser beam (12a) is diffracted, and/or for the purpose of changing a second order of diffraction ($B_{k,x,2}$, $B_{k,y,2}$) into which a second combined laser beam (12b) is diffracted, starting from a respective fundamental phase ($\delta\varphi_a$; $\delta\varphi_{a,b}$), in which the beam combining device (10) combines the coherent laser beams (3.1, ..., 3.N; 3.1.1, ..., 3.N.M) into a single laser beam (12) that is diffracted into the zeroth order of diffraction ($B_0$) or into an order of diffraction ($B_{k,x}$, $B_{k,y}$) that differs from the zeroth order of diffraction ($B_0$).

13. The method according to claim 11 or 12, further comprising:
adjusting a respective additional phase ($\Delta\varphi_a$) of the coherent laser beams (3.1, ..., 3.N; 3.1.1, ..., 3.N.M) for the purpose of producing a specified, in particular different power ($p_0$, $p_{-1}$, ...) of combined laser beams (12a,b) that are diffracted into at least two different orders of diffraction ($B_0$, $B_{-1,x}$, ...) starting from a respective fundamental phase ($\delta\varphi_a$; $\delta\varphi_{a,b}$) in which the beam combining device (10) combines the coherent laser beams (3.1, ..., 3.N; 3.1.1, ..., 3.N.M) into a single laser beam (12) that is diffracted into the zeroth order of diffraction ($B_0$) or into an order of diffraction ($B_{k,x}$, $B_{k,y}$) that differs from the zeroth order of diffraction ($B_0$).

**Revendications**

1. Système laser (1), comprenant :

une source laser d'amorçage (2) pour générer un faisceau laser d'amorçage (2a), ainsi qu'un appareil (5) pour combiner une pluralité de faisceaux laser cohérents (3.1, ..., 3.N ; 3.1.1, ..., 3.N.M), comprenant :

un dispositif de division (4) pour diviser un faisceau laser d'entrée (9) en la pluralité de faisceaux laser cohérents (3.1, ..., 3.N ; 3.1.1, ..., 3.N.M), une pluralité de dispositifs de réglage de phase (6.1, ..., 6.N) pour régler une phase respective ($\delta\varphi_a + \Delta\varphi_a$ ; $\delta\varphi_{a,b} + \Delta\varphi_{a,b}$) de l'un des faisceaux laser cohérents (3.1, ..., 3.N ; 3.1.1, ..., 3.N.M), et un dispositif de combinaison de faisceaux (10) pour combiner les faisceaux laser cohérents (3.1, ..., 3.N ; 3.1.1, ..., 3.N.M) provenant d'une pluralité de positions de grille (8.1, ..., 8.N ; 8.1.1, ..., 8.N.M) d'un agencement de grille (16), dans lequel le dispositif de combinaison de faisceaux (10) comprend un agencement de microlentilles (11) avec au moins deux réseaux de microlentilles (17a,b),

**caractérisé par**

un dispositif de commande (15) configuré pour régler la phase respective ($\delta\varphi_a + \Delta\varphi_a$ ; $\delta\varphi_{a,b} + \Delta\varphi_{a,b}$) de l'un des faisceaux laser cohérents (3.1, ..., 3.N ; 3.1.1, ..., 3.N.M) en fonction d'un agencement de la position de grille respective (8.1, ..., 8.N ; 8.1.1, ..., 8.N.M) dans l'agencement de grille (16), afin de combiner les faisceaux laser cohérents (3.1, ..., 3.N ; 3.1.1, ..., 3.N.M) en au moins un faisceau laser (12, 12a,b) diffracté selon l'ordre de diffraction ($B_{k,x}$, $B_{k,y}$ ; $B_{k,x,1}$, $B_{k,y,1}$, $B_{k,x,2}$, $B_{k,y,2}$) différent de l'ordre de diffraction zéro ($B_0$), et configuré pour faire varier la phase respective ($\delta\varphi_a + \Delta\varphi_a$ ; $\delta\varphi_{a,b} + \Delta\varphi_{a,b}$) de l'un des faisceaux laser cohérents (3.1, ..., 3.N ; 3.1.1, ..., 3.N.M) en fonction d'un agencement de la position de grille respective (8.1, ..., 8.N ; 8.1.1, ..., 8.N.M) dans l'agencement de grille (16), afin de modifier un ordre de diffraction ($B_{k,x}$ $B_{k,y}$) dans lequel est diffracté ledit au moins un faisceau laser combiné (12, 12a,b), dans lequel les positions de grille (8.1, ..., 8.N) dans l'agencement de grille (16) sont agencées selon une première direction (X), et dans lequel les faisceaux laser cohérents (3.1, ..., 3.N) et l'agencement de microlentilles (11) satisfont à la condition suivante :

$$N = p_x^2 \, / \, (\lambda_L \, f_E),$$

dans lequel N est un nombre de positions de grille (8.1, ..., 8.N) agencées selon la première direction (X), $p_x$ est un espacement de grille des microlentilles (20a,b ; 20a-c) d'un réseau de microlentilles respectif (17a,b ; 17a-c) dans la première direction (X), $\lambda_L$ est la longueur d'onde du laser, et $f_E$ est la distance focale de l'agencement de microlentilles (11), dans lequel

soit

le faisceau laser d'amorçage (2a) de la source laser d'amorçage (2) forme le faisceau laser d'entrée (9) du dispositif de division (4) de l'appareil (5),

soit

le système laser (1) comporte au moins un amplificateur optique (7) pour amplifier le faisceau laser d'amorçage (2a) avant qu'il n'entre dans l'appareil (5), dans lequel le faisceau laser d'amorçage amplifié forme le faisceau laser d'entrée (9) du dispositif de division (4) de l'appareil (5),

soit

le système laser (1) comprend un appareil additionnel (5') pour combiner une pluralité de faisceaux laser cohérents additionnels (3.1', ..., 3.N'), comprenant :

un dispositif de division additionnel (4') pour diviser le faisceau laser d'amorçage (2a) en une pluralité de faisceaux laser cohérents additionnels (3.1', ..., 3.N'), une pluralité de dispositifs de réglage de phase additionnels (6.1', ..., 6.N') pour régler une phase respective ($\delta\varphi_a$) de l'un des faisceaux laser cohérents additionnels (3.1', ..., 3.N'), et

un dispositif de combinaison de faisceaux additionnel (10') pour combiner les faisceaux laser cohérents additionnels (3.1', ..., 3.N') provenant d'une pluralité de positions de grille additionnelles (8.1', ..., 8.N') d'un agencement de grille additionnel (16'), dans lequel le dispositif de combinaison de faisceaux additionnel (10') comprend un agencement de microlentilles additionnel (11') avec au moins deux réseaux de microlentilles additionnels (17a', 17b'), ainsi qu'un dispositif de commande additionnel (15') configuré pour régler la phase respective ($\delta\varphi_a$) de l'un des faisceaux laser cohérents additionnels (3.1', ..., 3.N') en fonction d'un agencement de la position de grille additionnelle respective (8.1', ..., 8.N') dans l'agencement de grille additionnel (16') afin de combiner les faisceaux laser cohérents additionnels (3.1', ..., 3.N') en un faisceau laser (12') diffracté selon l'ordre de diffraction zéro ($B_0$) ou selon l'ordre de diffraction ($B_{k,x}$, $B_{k,y}$) différent de l'ordre de diffraction zéro ($B_0$), qui forme le faisceau laser d'entrée (9) du dispositif de division (4) de l'appareil (5).

**2.** Système laser selon la revendication 1, dans lequel le dispositif de commande (15) est configuré pour régler la phase respective ($\delta\varphi_a + \Delta\varphi_a$ ; $\delta\varphi_{a,b} + \Delta\varphi_{a,b}$) de l'un des faisceaux laser cohérents (3.1, ..., 3.N ; 3.1.1, ..., 3.N.M), qui se compose d'une phase de base respective ($\delta\varphi_a$ ; $\delta\varphi_{a,b}$) selon laquelle le dispositif de combinaison de faisceaux (10) combine les faisceaux laser cohérents (3.1, ..., 3.N ; 3.1.1, ..., 3.N.M) en un seul faisceau laser (12) diffracté selon l'ordre de diffraction zéro ($B_0$) ou selon l'ordre de diffraction ($B_{k,x}$, $B_{k,y}$) différent de l'ordre de diffraction zéro ($B_0$), ainsi que d'une phase additionnelle ($\Delta\varphi_a$ ; $\Delta\varphi_{a,b}$).

3. Système laser selon la revendication 2, dans lequel les positions de grille (8.1, ..., 8.N) sont agencées selon une première direction (X) et dans lequel le dispositif de commande (15) est configuré, pour la combinaison des faisceaux laser cohérents (3.1, ..., 3.N) en un seul faisceau laser combiné (12) diffracté selon l'ordre de diffraction $B_{k,x}$ différent de l'ordre de diffraction zéro ($B_0$) dans la première direction (X), pour régler la phase additionnelle respective $\Delta\varphi_a$ d'un faisceau laser cohérent (3.1, ..., 3.N) dans une position de grille a (8.1, ..., 8.N) dans la première direction (X), qui est obtenue par :

$$\Delta\varphi_a = - (2 \pi / N) (a - (N+1) / 2) B_{k,x},$$

dans lequel N désigne un nombre de positions de grille (8.1, ..., 8.N) agencées selon la première direction (X) et $B_{k,x}$ désigne un entier positif ou négatif.

4. Système laser selon la revendication 3, dans lequel les positions de grille (8.1.1, ..., 8.N.M) dans l'agencement de grille (16) sont en outre agencées selon une deuxième direction (Y), de préférence perpendiculaire à la première direction, et dans lequel le dispositif de commande (15) est configuré pour la combinaison des faisceaux laser cohérents (3.1.1, ..., 3.N.M) en un seul faisceau laser combiné (12) diffracté selon l'ordre de diffraction $B_{k,x}$ différent de l'ordre de diffraction zéro ($B_0$) dans la première direction (X) et selon l'ordre de diffraction $B_{k,y}$ différent de l'ordre de diffraction zéro ($B_0$) dans la deuxième direction (Y), pour régler une phase additionnelle $\Delta\varphi_{a,b}$ d'un faisceau laser cohérent (3.1, ..., 3.N) à une position de grille a (8.1.1, ..., 8.N.M) selon la première direction (X) et à une position de grille b (8.1.1, ..., 8.N.M) selon la deuxième direction (Y), qui est obtenue par :

$$\Delta\varphi_{a,b} = - ((2\pi / N) (a - (N+1) / 2) B_{k,x} + (2\pi / M) (b - (M+1) / 2) B_{k,y})$$

dans lequel M désigne un nombre de positions de grille (8.1.1, ..., 8.N.M) dans la deuxième direction (Y) et $B_{k,y}$ désigne un nombre entier positif ou négatif.

5. Système laser selon la revendication 3 ou 4, dans lequel le dispositif de division (4) destiné à diviser un faisceau laser d'entrée (9) en la pluralité de faisceaux laser cohérents (3.1, ..., 3.N ; 3.1.1, ..., 3.N.M) est configuré comme un agencement de microlentilles additionnel, de préférence avec deux réseaux de microlentilles additionnels (17'a, 17'b), et dans lequel le dispositif de commande (15) est configuré pour régler le double des phases de base ($\delta\varphi_a$ ; $\delta\varphi_{a,b}$) afin de combiner les faisceaux laser cohérents (3.1, ..., 3.N) en un seul faisceau laser combiné (12) diffracté selon l'ordre de diffraction $B_{k,x}$ différent de l'ordre de diffraction zéro ($B_0$) dans la première direction (X) et de préférence selon l'ordre de diffraction $B_{k,y}$ différent de l'ordre de diffraction zéro ($B_0$) dans la deuxième direction (Y).

6. Système laser selon la revendication 2, dans lequel le dispositif de commande (15) est configuré pour faire varier la phase additionnelle respective ($\Delta\varphi_a$ ; $\Delta\varphi_{a,b}$) des faisceaux laser cohérents (3.1, ..., 3.N ; 3.1.1, ..., 3.N.M) afin de modifier un premier ordre de diffraction ($B_{k,x,1}$, $B_{k,y,1}$) dans lequel un premier faisceau laser combiné (12a) est diffracté, et/ou afin de modifier un deuxième ordre de diffraction ($B_{k,x,2}$, $B_{k,y,2}$) dans lequel un deuxième faisceau laser combiné (12b) est diffracté.

7. Système laser selon la revendication 2 ou 6, dans lequel le dispositif de commande (15) est configuré pour régler une phase additionnelle respective ($\Delta\varphi_a$) des faisceaux laser cohérents (3.1, ..., 3.N ; 3.1.1, ..., 3.N.M) afin de générer une puissance ($p_0$, $p_{-1}$, ...) prédéterminée, en particulier différente, d'au moins deux faisceaux laser combinés (12a,b) diffractés selon différents ordres de diffraction ($B_0$, $B_{-1,x}$, ...).

8. Système laser selon l'une des revendications précédentes, configuré pour coupler des faisceaux laser cohérents adjacents (3.1, 3.2 ; 3.2, 3.3) dans la première direction (X) avec une différence angulaire prédéterminée $\delta\theta_x$ dans l'agencement de microlentilles (11), où s'applique :

$$\delta\theta_x = \lambda_L / p_x,$$

dans lequel $\lambda_L$ désigne la longueur d'onde du laser et $p_x$ un espacement de grille des microlentilles (20a,b ; 20a-c) d'un réseau de microlentilles respectif (17a,b ; 17a-c) dans la première direction (X).

9. Système laser selon l'une des revendications précédentes, comprenant en outre : un dispositif optique de couplage (18) pour coupler les faisceaux laser cohérents (3.1, ..., 3.N ; 3.1.1, ..., 3.N.M) dans l'agencement de microlentilles (11), dans lequel le dispositif optique de couplage (18) comporte au moins un dispositif de focalisation, en particulier au moins une lentille de focalisation (19), pour focaliser la pluralité de faisceaux laser cohérents sur l'agencement de microlentilles (11).

10. Système laser selon la revendication 9, dans lequel les positions de grille adjacentes (8.1, ..., 8.N ; 8.1.1, ..., 8.N.M) sont agencées selon une ligne dans la première direction (X) et sont séparées par une distance $\delta x$, obtenue par $\delta x = \lambda_L f_2 / p_x$,
dans lequel $\lambda_L$ est la longueur d'onde du laser, $f_2$ est la distance focale du dispositif de focalisation (19), et $p$ est l'espacement de grille des microlentilles (20a,b ; 20a-c) d'un réseau de microlentilles respectif (17a,b ; 17a-c) dans la première direction (X).

11. Procédé de combinaison d'une pluralité de faisceaux laser cohérents (3.1, ..., 3.N ; 3.1.1, ..., 3.N.M), en particulier au moyen d'un appareil (5) d'un système laser (1) selon l'une des revendications 1 à 10, comprenant :

le couplage de la pluralité de faisceaux laser cohérents (3.1, ..., 3.N ; 3.1.1, ..., 3.N.M) provenant d'une pluralité de positions de grille (8.1, ..., 8.N ; 8.1.1, ..., 8.N.M) agencées selon un agencement de grille (16) dans un agencement de microlentilles (11) comprenant au moins deux réseaux de microlentilles (17a, b ; 17a-c), ainsi que la combinaison des faisceaux laser cohérents (3.1, ..., 3.N ; 3.1.1, ..., 3.N.M) dans l'agencement de microlentilles (11),
**caractérisé par**
le réglage d'une phase respective ($\delta\varphi_a + \Delta\varphi_a$ ; $\delta\varphi_{a,b} + \Delta\varphi_{a,b}$) de l'un des faisceaux laser cohérents (3.1, ..., 3.N ; 3.1.1, ..., 3.N.M) en fonction d'un agencement de la position de grille respective (8.1, ..., 8.N ; 8.1.1, ..., 8.N.M) dans l'agencement de grille (16) pour combiner les faisceaux laser cohérents (3.1, ..., 3.N ; 3.1.1, ..., 3.N.M) en au moins un faisceau laser (12, 12a,b) diffracté selon l'ordre de diffraction ($B_{k,x}$, $B_{k,y}$ ; $B_{k,x,1}$, $B_{k,y,1}$, $B_{k,x,2}$, $B_{k,y,2}$) différent de l'ordre de diffraction zéro ($B_0$) et pour faire varier la phase respective ($\delta\varphi_a + \Delta\varphi_a$ ; $\delta\varphi_{a,b} + \Delta\varphi_{a,b}$) des faisceaux laser cohérents (3.1, ..., 3.N ; 3.1.1, ..., 3.N.M) en fonction d'un agencement de la position de grille respective (8.1, ..., 8.N ; 8.1.1, ..., 8.N.M) dans l'agencement de grille (16) afin de modifier un ordre de diffraction ($B_{k,x}$ $B_{k,y}$) dans lequel est diffracté ledit au moins un faisceau laser combiné (12, 12a,b), dans lequel les positions de grille (8.1, ..., 8.N) dans l'agencement de grille (16) sont agencées selon une première direction (X), et dans lequel les faisceaux laser cohérents (3.1, ..., 3.N) et l'agencement de microlentilles (11) satisfont à la condition suivante :

$$N = p_x^2 / (\lambda_L f_E),$$

dans lequel N est un nombre de positions de grille (8.1, ..., 8.N) agencées selon la première direction (X), $p_x$ est un espacement de grille des microlentilles (20a,b ; 20a-c) d'un réseau de microlentilles respectif (17a,b ; 17a-c) dans la première direction (X), $\lambda_L$ est la longueur d'onde du laser, et $f_E$ est la distance focale de l'agencement de microlentilles (11).

12. Procédé selon la revendication 11, comprenant en outre :
la variation d'une phase additionnelle respective ($\Delta\varphi_{a,b}$ ; $\Delta\varphi_{a,b}$) des faisceaux laser cohérents (3.1, ..., 3.N ; 3.1.1, ..., 3.N.M) pour modifier un premier ordre de diffraction ($B_{k,x,1}$, $B_{k,y,2}$) selon lequel un premier faisceau laser combiné (12a) est diffracté, et/ou pour modifier un deuxième ordre de diffraction ($B_{k,x,2}$, $B_{k,y,2}$) selon lequel un deuxième faisceau laser combiné (12b) est diffracté, à partir d'une phase de base respective ($\delta\varphi_a$ ; $\delta\varphi_{a,b}$) selon laquelle le dispositif de combinaison de faisceaux (10) combine les faisceaux laser cohérents (3.1, ..., 3.N ; 3.1.1, ..., 3.N.M) en un seul faisceau laser (12) diffracté selon l'ordre de diffraction zéro ($B_0$) ou selon l'ordre de diffraction ($B_{k,x}$, $B_{k,y}$) différent de l'ordre de diffraction zéro ($B_0$).

13. Procédé selon la revendication 11 ou 12, comprenant en outre :
le réglage d'une phase additionnelle respective ($\Delta\varphi_a$) des faisceaux laser cohérents (3.1, ..., 3.N ; 3.1.1, ..., 3.N.M) pour générer une puissance ($p_0$, $p_{-1}$, ...) prédéterminée, en particulier différente, de faisceaux laser combinés (12a,b) diffractés selon au moins deux ordres de diffraction différents ($B_0$, $B_{-1,x}$, ...) à partir d'une phase de base respective ($\delta\varphi_a$ ; $\delta\varphi_{a,b}$), dans lequel le dispositif de combinaison de faisceaux (10) combine les faisceaux laser cohérents (3.1, ...,

3.N ; 3.1.1, ..., 3.N.M) en un seul faisceau laser (12) diffracté selon l'ordre de diffraction zéro ($B_0$) ou selon l'ordre de diffraction ($B_{k,x}$, $B_{k,y}$) différent de l'ordre de diffraction zéro ($B_0$).

Fig. 1a

Fig. 1b

Fig. 1c

Fig. 2

Fig. 3a

Fig. 3b

12,$B_{-1,x}$

$\theta_y$[mrad]

4
2
0
-2
-4

-4  -2  0  2  4
$\theta_x$[mrad]

## Fig. 4a

12,$B_{+2,x}$

$\theta_y$[mrad]

4
2
0
-2
-4

-4  -2  0  2  4
$\theta_x$[mrad]

## Fig. 4b

12a,$B_{-1,x,1},p_{-1}$   12b,$B_{0},p_{0}$

$\theta_y$[mrad]

4
2
0
-2
-4

-4  -2  0  2  4
$\theta_x$[mrad]

## Fig. 5a

12a,$B_{-1,x,1}$   12b,$B_{+2,x,2}$

$\theta_y$[mrad]

4
2
0
-2
-4

-4  -2  0  2  4
$\theta_x$[mrad]

## Fig. 5b

Fig. 6a

Fig. 6b

Fig. 6c

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130107343 A1
- US 2007201795 A1
- DE 102018211971
- EP 2019069324 W

**In der Beschreibung aufgeführte Nicht-Patentliteratur**

- **M. ZIMMERMANN et al.** Refractive Micro-optics for Multi-spot and Multi-line Generation. *Proceedings of LPM2008-the 9th International Symposium on Laser Precision Microfabrication*